(19) Europäisches Patentamt / European Patent Office / Office européen des brevets

(11) **EP 3 479 085 B1**

(12) **EUROPÄISCHE PATENTSCHRIFT**

(45) Veröffentlichungstag und Bekanntmachung des Hinweises auf die Patenterteilung:
**02.11.2022 Patentblatt 2022/44**

(21) Anmeldenummer: **17731848.2**

(22) Anmeldetag: **14.06.2017**

(51) Internationale Patentklassifikation (IPC):
**G01J 5/02** *(2022.01)*    **G01J 5/06** *(2022.01)*
**G01J 5/10** *(2006.01)*

(52) Gemeinsame Patentklassifikation (CPC):
**G01J 5/0245; G01J 5/023; G01J 5/024; G01J 5/06; G01J 5/10;** G01J 2005/066

(86) Internationale Anmeldenummer:
**PCT/EP2017/064551**

(87) Internationale Veröffentlichungsnummer:
**WO 2018/001739 (04.01.2018 Gazette 2018/01)**

(54) **VERFAHREN ZUR KONTAKTFREIEN ERMITTLUNG EINER TEMPERATUR SOWIE INFRAROT-MESSSYSTEM**

METHOD FOR DETERMINING A TEMPERATURE WITHOUT CONTACT, AND INFRARED MEASURING SYSTEM

PROCÉDÉ DE MESURE SANS CONTACT D'UNE TEMPÉRATURE AINSI QUE SYSTÈME DE MESURE PAR INFRAROUGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2016 DE 102016211821**

(43) Veröffentlichungstag der Anmeldung:
**08.05.2019 Patentblatt 2019/19**

(73) Patentinhaber: **Robert Bosch GmbH 70442 Stuttgart (DE)**

(72) Erfinder:
• **FRANK, Michael**
  **75015 Bretten (DE)**
• **SENZ, Volkmar**
  **72555 Metzingen (DE)**
• **BADEJA, Michael**
  **72764 Reutlingen (DE)**
• **RUMBERG, Axel**
  **76199 Karlsruhe (DE)**
• **KRUEGER, Michael**
  **72770 Reutlingen (DE)**
• **DITTMER, Helge**
  **72070 Tuebingen (DE)**

(56) Entgegenhaltungen:
WO-A1-01/36926        DE-A1-102012 208 220
DE-U1-202013 008 745   US-A1- 2001 040 216
US-A1- 2010 046 577    US-A1- 2010 193 706

• VIDAS STEPHEN ET AL: "Ad Hoc Radiometric Calibration of a Thermal-Infrared Camera", 2013 INTERNATIONAL CONFERENCE ON DIGITAL IMAGE COMPUTING: TECHNIQUES AND APPLICATIONS (DICTA), IEEE, 26. November 2013 (2013-11-26), Seiten 1-8, XP032536458, DOI: 10.1109/DICTA.2013.6691478 [gefunden am 2013-12-20]
• OLIVIER RIOU ET AL: "Nonuniformity correction and thermal drift compensation of thermal infrared camera", PROCEEDINGS VOLUME 9025IS&T/SPIE ELECTRONIC IMAGING | 2-6 FEBRUARY 2014INTELLIGENT ROBOTS AND COMPUTER VISION XXXI: ALGORITHMS AND TECHNIQUES, Bd. 5405, 12. April 2004 (2004-04-12), Seite 294, XP055402632, US ISSN: 0277-786X, DOI: 10.1117/12.547807

EP 3 479 085 B1

**Beschreibung**

Die Erfindung betrifft ein Verfahren zur kontaktfreien Ermittlung einer Temperatur einer Oberfläche, insbesondere zur kontaktfreien Ermittlung einer Temperaturverteilung einer Oberfläche, sowie ein entsprechendes Infrarot-Messsystem.

Stand der Technik

Vorrichtungen und Verfahren zur kontaktfreien Ermittlung einer Temperatur einer Oberfläche, insbesondere zur kontaktfreien Ermittlung einer Temperaturverteilung einer Oberfläche, sind im Stand der Technik bekannt und finden vielseitig Anwendung, beispielsweise zur Sicherheitsüberprüfung elektrischer Schaltungen, zur Fehlersuche in maschinellen Abläufen oder zur Identifikation unzureichender Wärmeisolation im Rahmen einer Wärme- und/oder Kältedämmung. Infrarotthermometer weisen gegenüber konventionellen Temperaturmessgeräten den Vorteil des kontaktfreien und schnellen Messens auf und lassen sich insbesondere dann einsetzen, wenn zu vermessende Bereiche nur schwer oder gar nicht zugänglich sind. Die Temperaturmessung mittels eines infrarotsensitiven Thermometers basiert dabei auf Detektion von Wärmestrahlung, d.h. Infrarotstrahlung insbesondere in einem Wellenlängenbereich zwischen 3 $\mu$m und 50 $\mu$m, die von jedem Gegenstand abhängig von seiner Temperatur, insbesondere seiner Oberflächentemperatur, mit unterschiedlicher Intensität emittiert wird. Aus einer gemessenen Intensität der emittierten Wärmestrahlung mittels des Temperaturmessgeräts kann eine Oberflächentemperatur des emittierenden Körpers bestimmt werden.

Im Stand der Technik bekannte Infrarotthermometer lassen sich im Wesentlichen in zwei Ausführungsformen unterscheiden. Vorrichtungen erster Art, sogenannte Spot-Thermometer, umfassen typischerweise einen Infrarotsensor, eine Linse und eine Anzeige und weisen typischerweise ein kegelförmiges, bevorzugt kleines Messvolumen auf, aus dem Wärmestrahlung nachgewiesen wird. US 6,659,639 A1 und US 2009/0304042 A1 beschreiben Vorrichtungen und Verfahren eines Messgeräts dieser Art.

Infrarotthermometer einer zweiten Art, sogenannte Wärmebildkameras, weisen hingegen typischerweise einen infrarotsensitiven Bildsensor, ein Linsensystem sowie einen Bildschirm auf und erlauben, ähnlich einer im visuellen Spektralbereich arbeitenden Kamera, einen Gegenstand im infraroten Bereich des Strahlungsspektrums zu untersuchen und auf dem Bildschirm als zweidimensionales, farbkodiertes Abbild des Gegenstands auszugeben. US 2009/0302219 A1 und US 7,652,251 A1 beschreiben Vorrichtungen und Verfahren dieser zweiten Art.

Aus der DE 20 2013 008 745 U1 ist eine Wärmebildkamera mit einem Sensorpixel aufweisenden Sensorfeld bekannt, bei der eine Blende im Strahlengang der Wärmebildkamera angeordnet ist, die mit ihrer Projektion und/oder mit ihrem Schattenwurf das Sensorfeld in wenigstens einen wenigstens ein Sensorpixel enthaltenden, überschatteten Bereich und in wenigstens einen unüberschatteten Bereich unterteilt. Mithilfe eines von dem wenigstens einen überschatteten Sensorpixel ermittelten Mess- und/oder Referenzwertes kann eine Offsetkorrektur der Wärmebildkamera ohne einen zumindest zeitweise sämtliche Sensorpixel abdeckenden Shutter (Verschlusselement) durchgeführt werden.

Ferner ist aus der DE 10 2008 041 750 A1 ein mikrostrukturiertes, eine elektrische Eigenschaft in ihrem Wert temperaturabhängig veränderndes Referenzpixel für Sensoren bekannt, welches mit einem Substrat thermisch gekoppelt ist, aber gegenüber diesem Substrat elektrisch isoliert ist. Unter Verwendung dieses Referenzpixels wird in einem Verfahren zum Betrieb eines Temperatursensors eine zu messende Temperatur bestimmt, wobei das Referenzpixel zur Referenzierung herangezogen wird.

Ferner ist aus EP 2 690 416 A1 ein Infrarot-Bildsensor bekannt, der mindestens ein Referenzpixel aufweist, wobei je eine Differenzschaltung zum Erfassen eines ersten Differenzsignals und eines zweiten Differenzsignal vorgesehen ist, und eine Pixelsignal-Berechnungseinheit vorgesehen ist, die ein Signal für jedes der Pixel auf der Basis des ersten Differenzsignals und des zweiten Differenzsignal berechnet. Ferner sind aus WO 2007/015235 A1 und aus DE 20 2013 008745 U1 die Verwendung von Referenzpixeln bekannt.

Aus WO 01/36926 A1 ist eine Infrarotstrahlungsdetektoranordnung bekannt, die eine Mehrzahl von Messpixeln sowie mindestens ein Blindpixel enthält, wobei das Blindpixel vorgesehen ist, ein Signal bereitzustellen, das eine thermische Verzerrung der Infrarotstrahlungsdetektoranordnung anzeigt. Aus US 2010/193706 A1 ist ein Infrarotsensor bekannt, bei dem um oder in einem Pixelarray verteilte Blindpixel verwendet werden, um eine Temperaturverteilung über des Pixelarray zu ermitteln. Ferner ist aus DE 10 2012 208220 A1 die Verwendung eines Blindpixels bekannt.

Weitere Beispiele für Kalibrierverfahren von Infrarot-Detektorarrays finden sich in US 2001/040216 A1 und US 2010/046577 A1.

Offenbarung der Erfindung

Die Erfindung geht aus von einem Infrarot-Messsystem, insbesondere einer handgehaltenen Wärmebildkamera, zur kontaktfreien Ermittlung einer Temperatur einer Oberfläche, insbesondere zur kontaktfreien Ermittlung einer Temperaturverteilung einer Oberfläche. Das Infrarot-Messsystem weist erfindungsgemäß zumindest ein Infrarot-Detektorarray mit einem Detektorarray-Substrat auf, sowie

- mit einer Mehrzahl von Messpixeln, die jeweils mit einer ersten thermischen Wärmeleitfähigkeit $\lambda_{MP}$ an das Detektorarray-Substrat angebunden sind, wobei die Messpixel für Infrarotstrahlung empfindlich sind und jeweils ein Messsignal zur Ermittlung eines von einer Intensität der einfallenden Infrarotstrahlung abhängigen Temperaturmesswerts $T_{MP}$ bereitstellen,
- mit einer Mehrzahl von Referenzpixeln, die jeweils mit einer zweiten thermischen Wärmeleitfähigkeit $\lambda_{BP}$ an das Detektorarray-Substrat angebunden sind, und die jeweils ein Messsignal zur Ermittlung eines Temperaturmesswerts $T_{BP}$ bereitstellen,

wobei die Referenzpixel als für Infrarotstrahlung im Wesentlichen unempfindliche Blindpixel realisiert sind, wobei die zweite thermische Wärmeleitfähigkeit $\lambda_{BP}$ größer ist als die erste thermische Wärmeleitfähigkeit $\lambda_{MP}$.

Ferner ist eine Auswertevorrichtung des Infrarot-Messsystems dazu eingerichtet, das erfindungsgemäße Verfahren zur kontaktfreien Ermittlung einer Temperatur einer Oberfläche, insbesondere zur kontaktfreien Ermittlung einer Temperaturverteilung einer Oberfläche, durchzuführen. Dem Verfahren liegt ein Infrarot-Messsystem, insbesondere eine handgehaltene Wärmebildkamera, zur kontaktfreien Ermittlung einer Temperaturverteilung einer Oberfläche zu Grunde, wie es im Folgenden beschrieben wird.

Das Infrarot-Messsystem, insbesondere die handgehaltene Wärmebildkamera, ist dazu eingerichtet, aus einem Messbereich auf der Oberfläche abgestrahlte Wärmestrahlung insbesondere berührungslos zu detektieren. Das Infrarot-Messsystem ist dazu vorgesehen, eine Information auszugeben, die eine Temperatur der Oberfläche betrifft. Diese Information kann vorteilhaft als eine oder mehrere Temperaturangaben oder als eine Temperaturverteilung, besonders vorteilhaft als ein aus einer Vielzahl von ortsaufgelöst ermittelten Temperaturangaben zusammengesetztes Wärmebild, realisiert sein.

Unter dem "Messbereich" wird ein geometrischer, begrenzter Bereich verstanden, der eine Menge von Teilchen oder Bereichen des Gegenstands umfasst, deren Wärmestrahlung den Gegenstand in Richtung des Infrarot-Messsystems verlässt und von diesem zumindest teilweise erfasst wird. Je nach Material des Gegenstands, insbesondere je nach Transparenz des Gegenstands für Infrarotstrahlung, können Teilchen oder Bereiche von dem Infrarot-Messsystem erfasst werden, die sich unterschiedlich weit in dem Gegenstand befinden. Insbesondere kann unter "Gegenstand" neben einem Festkörper auch ein Fluid, insbesondere eine Flüssigkeit und ein Gas verstanden werden, dessen Temperatur in analoger Weise vermessen werden kann. Zur Vereinfachung der folgenden Beschreibung wird mit "Messbereich" insbesondere der Bereich auf einer Gegenstandsoberfläche gekennzeichnet, der sich im Wesentlichen aus der Schnittmenge zwischen einem Messvolumen - das Volumen aus dem die erfindungsgemäße Vorrichtung Wärmestrahlung erfasst - und der Oberfläche des zu untersuchenden Gegenstands ergibt. Je nach Materialeigenschaft des Gegenstands kann dieser Messbereich aber auch Wärmestrahlung aus tieferen Schichten des Gegenstands umfassen.

Das Infrarot-Messsystem, insbesondere die handgehaltene Wärmebildkamera, weist zumindest ein Infrarot-Detektorarray sowie eine Auswertevorrichtung auf. Ferner kann das Infrarot-Messsystem in einer Ausführungsform des Infrarot-Messsystems eine Optik, insbesondere eine abbildende Optik, aufweisen. Eine Optik ist dazu vorgesehen, aus dem Messbereich emittierte Wärmestrahlung im Infrarotspektrum, vorzugsweise im mittleren Infrarotspektrum im Wellenlängenbereich zwischen 3 $\mu$m und 50 $\mu$m, auf eine Oberfläche des aus Sicht des Gegenstands hinter der Optik angeordneten Infrarot-Detektorarrays des Infrarot-Messsystems zu projizieren. In einer Ausführungsform des Infrarot-Messsystems kann die Optik auch dazu vorgesehen sein, ein Abbild des Messbereichs auf eine Oberfläche des Infrarot-Detektorarrays zu projizieren, bevorzugt ein Abbild des Messbereichs auf eine Oberfläche des Infrarot-Detektorarrays zu fokussieren. Eine Optik kann dazu Wärmestrahlung lenkende, leitende, bündelnde und/oder anderweitig in der räumlichen Ausbreitung beeinflussende optische Komponenten aufweisen, beispielsweise Linsen, Spiegel oder dergleichen. Ferner kann in einer Ausführungsform eine Optik dazu vorgesehen sein, eine Größe des auf einer Oberfläche befindlichen Messbereichs unter Verwendung der Optik veränderbar einzustellen, insbesondere stufenlos "zoombar" einzustellen.

Unter "vorgesehen" soll im Folgenden speziell "programmiert", "ausgelegt", "konzipiert" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Das Infrarot-Detektorarray dient der Erfassung von aus dem Messbereich abgestrahlter und auf die Oberfläche des Infrarot-Detektorarrays geleiteter Infrarotstrahlung, insbesondere Wärmestrahlung (Anmerkung: in dieser Schrift werden die Begriffe "Infrarotstrahlung" und "Wärmestrahlung." synonym verwendet). Das Infrarot-Detektorarray weist zumindest ein Detektorarray-Substrat sowie eine Mehrzahl von Messpixeln und eine Mehrzahl von Referenzpixeln auf. In einer Ausführungsform des Infrarot-Messsystems ist das Infrarot-Detektorarray beispielsweise als ein Siliziumsensorchip realisiert, der als Detektorarray-Substrat Silizium aufweist.

Die Messpixel sind jeweils an einer dem zu untersuchenden Gegenstand zugewandten Oberfläche des Detektorarray-Substrats angeordnet. Die Messpixel sind für aus dem Messbereich einfallende Infrarotstrahlung empfindlich, wobei jedes Messpixel ein strahlungsempfindliches, insbesondere infrarotlichtempfindliches, Element darstellt. Beispiele für infrarotlichtempfindliche Elemente sind unter anderem Fotodioden, Bolometer, pyroelektrische Sensoren, P/N-Dioden, PIN-Dioden, Avalanche Photo Dioden (APD), (modulierte) CCD-Chips und CMOS-Pixel, allerdings können auch andere, einem Fachmann sinnvoll erscheinende, beispielsweise auf Siliziumsensoren, Indium-Gallium-Arsenid-Sensoren, Bleisulfid-Sensoren, Indium-Antimon-Sensoren, Cadmium-Quecksilber-Tellurid-Sensoren, Gallium-Arsenid-Quantentopf-Sensoren, Cadmium-Quecksilber-Tellurid-Sensoren oder dergleichen basierende infrarotlichtempfindliche Elemente verstanden werden. In einer Ausführungsform des Infrarot-Messsystems sind die Messpixel als P/N-Dioden oder sog. Thermodioden realisiert. Die Messpixel sind dazu vorgesehen, Strahlung aus dem Infrarotbereich, insbesondere dem mittleren Infrarotbereich im Wellenlängenbereich zwischen 3 $\mu$m und 50 $\mu$m, zu erfassen und in ein Messsignal, insbesondere ein elektrisches Messsignal, umzuwandeln.

Jedes Messpixel ist mit einer ersten thermischen Wärmeleitfähigkeit $\lambda_{MP}$ an das Detektorarray-Substrat angebunden. Unter "mit einer thermischen Wärmeleitfähigkeit A angebunden" ist zu verstehen, dass ein jeweiliges Pixel (der allgemeine Ausdruck "Pixel" bezeichnet im Folgenden sowohl Messpixel als auch Referenzpixel) auf Grund seiner Anbindung zum Detektorarray-Substrat, d.h. seiner mechanischen Verbindung zum Detektorarray-Substrat, eine Fähigkeit zum Ableiten von mittels Infrarotstrahlung eingetragener Wärme an das Detektorarray-Substrat aufweist. Ein von dem jeweiligen Pixel an das Detektorarray-Substrat abfließender Wärmestrom ist dabei proportional zur thermischen Wärmeleitfähigkeit A seiner Anbindung gemäß $P = \lambda \cdot \Delta T$. Dabei gilt für die thermische Leitfähigkeit

$$\lambda = \lambda_{spez.} \cdot A / L \qquad (1)$$

mit der vom Wärmestrom durchflossenen Querschnittsfläche A und Länge L der Anbindung an das Detektorarray-Substrat, der über die Anbindung abfallenden Temperaturdifferenz $\Delta T$ sowie der spezifischen, d.h. materialintrinsischen Wärmeleitfähigkeit $\lambda_{spez.}$ des Materials der Anbindung.

In Folge der Einstrahlung von Infrarotstrahlung $P_{MP}$ erwärmt sich ein jeweiliges Messpixel um $\Delta T_{MP}$, wobei sich in einer Ausführungsform des Infrarot-Messsystems auf Grund der Erwärmung eine elektrische Spannung des Messpixels gegenüber einem durch das Messpixel fließenden Strom $I_{MP}$ ändert. Folglich verändert sich die über das Messpixel abfallende Spannung. Über eine Erfassung der Messpixel-Spannung $U_{MP}$ und/oder des Messpixelstroms $I_{MP}$ kann auf diese Weise ein Messsignal bereitgestellt werden, dass mit der eingestrahlten Wärmeleistung der Infrarotstrahlung $P_{MP}$ auf das Messpixel korreliert. Somit stellen die Messpixel jeweils ein von einer Intensität der einfallenden Infrarotstrahlung abhängiges Messsignal zur Ermittlung eines ebenfalls von der Intensität der einfallenden Infrarotstrahlung abhängenden Temperaturmesswert $T_{MP}$ bereit. Die erste thermische Wärmeleitfähigkeit $\lambda_{MP}$, mit der die Messpixel an das Detektorarray-Substrat angebunden sind, wird in einer Ausführungsform des Infrarot-Messsystems vorteilhaft derart gewählt, dass die Messpixel eine hohe Empfindlichkeit für eingestrahlte Infrarotstrahlung aufweisen.

Die Messsignale eines jeden Messpixels können beispielsweise als eine elektrische Spannung oder als ein elektrischer Strom von den Messpixeln bereitgestellt werden. Insbesondere sei darauf hingewiesen, dass die jeweiligen Messsignale eines jeden Messpixels unabhängig voneinander bereitgestellt werden oder bereitgestellt werden können. Jedes von einem Messpixel bereitgestellte Messsignal kann oder wird zur Ermittlung eines Temperaturmesswerts $T_{MP}$ an die Auswertevorrichtung des Infrarot-Messsystems weitergeleitet, von der es einzeln und/oder in Kombination mit anderen Messsignalen anderer Messpixel ausgewertet wird. Unter Verwendung einer (beliebigen) Mehrzahl von Messpixeln des Infrarot-Detektorarrays kann somit eine Mehrzahl von Temperaturmesswerten $T_{MP}$ ermittelt werden. Insbesondere kann auf diese Weise eine Bildinformation für ein Wärmebild aus jeweils von dem zu untersuchenden Objekt in einen Raumwinkel des Messbereichs emittierter Infrarotstrahlung ermittelt werden.

Erfindungsgemäß weist das Infrarot-Detektorarray neben den Messpixeln eine Mehrzahl von Referenzpixeln auf, die jeweils Messsignale in Form einer elektrischen Spannung $U_{BP}$ oder eines elektrischen Stroms $I_{BP}$ bereitstellen, insbesondere unabhängig voneinander bereitstellen. Die Funktionsweise der Referenzpixel basiert dabei bevorzugt auf den gleichen Wirkzusammenhängen wie bei den Messpixeln, d.h. die Referenzpixel sind ebenfalls als infrarotlichtempfindliche Elemente wie beispielsweise Fotodioden, Bolometer, pyroelektrische Sensoren, P/N-Dioden, PIN-Dioden, Avalanche Photo Dioden (APD), (modulierte) CCD-Chips und CMOS-Pixel, oder dergleichen realisiert. Besonders bevorzugt bestehen die Referenzpixel prinzipiell aus den gleichen infrarotlichtempfindlichen Elementen wie die Messpixel, wobei die Referenzpixel jedoch als für aus dem Messbereich einfallende Infrarotstrahlung unempfindliche Blindpixel realisiert sind (Anmerkung: die Begriffe "Referenzpixel" und "Blindpixel" sind in dieser Schrift als synonym zu betrachten und werden synonym verwendet).

Jedes Referenzpixel ist dazu mit einer zweiten thermischen Wärmeleitfähigkeit $\lambda_{BP}$ an das Detektorarray-Substrat angebunden, wobei die zweite thermische Wärmeleitfähigkeit $\lambda_{BP}$ der Referenzpixel größer ist als die erste thermische Wärmeleitfähigkeit $\lambda_{MP}$ der Messpixel. Ein von dem jeweiligen Referenzpixel an das Detektorarray-Substrat abfließender Wärmestrom ist dabei also größer als ein von einem Messpixel an das Detektorarray-Substrat abfließender Wärmestrom. Dabei erwärmt sich ein Referenzpixel in Folge der Einstrahlung von Infrarotstrahlung - sofern die Referenzpixel auf Grund ihrer Anordnung auf dem Detektorarray von einstrahlender Infrarotstrahlung überhaupt erfasst werden - um ein $\Delta T_{BP}$, das kleiner ist als $\Delta T_{MP}$ der Messpixel. Folglich spiegelt auch das von den Referenzpixeln bereitgestellte Messsignal einen geringeren Temperaturanstieg der Referenzpixel wider.

Die zweite thermische Wärmeleitfähigkeit $\lambda_{BP}$, mit der die Referenzpixel an das Detektorarray-Substrat angebunden sind, wird in einer Ausführungsform des Infrarot-Messsystems vorteilhaft derart gewählt, dass die Referenzpixel eine verschwindend geringe Empfindlichkeit für eingestrahlte Infrarotstrahlung aufweisen. Unter "verschwindend geringe Empfindlichkeit" oder "im Wesentlichen unempfindlich" ist insbesondere zu verstehen, dass die Empfindlichkeit der Referenzpixel im Vergleich zu der Empfindlichkeit der Messpixel signifikant, insbesondere um einen Faktor 10, bevorzugt um einen Faktor 100, besonders bevorzugt um einen Faktor 1000 oder mehr, geringer ist. Dies kann insbesondere erreicht werden, wenn die einfallende Infrarotstrahlung derart schnell über die Anbindung an das Detektorarray-Substrat abgegeben wird, dass keine signifikante Erwärmung der Referenzpixel erfolgt. In diesem Sinne stellen die Referenzpixel jeweils ein von einer Intensität der einfallenden Infrarotstrahlung unabhängiges Messsignal zur Ermittlung eines ebenfalls von der Intensität der einfallenden Infrarotstrahlung unabhängigen Temperaturmesswerts $T_{BP}$ bereit.

Über eine Erfassung der Messpixel-Spannung $U_{BP}$ und/oder des Messpixelstroms $I_{BP}$ kann auf diese Weise ein Messsignal ermittelt werden, dass mit der eingestrahlten Wärmeleistung der Infrarotstrahlung zumindest weniger, bevorzugt nahezu gar nicht korreliert. Jedes von einem Referenzpixel bereitgestellte Messsignal wird zur Ermittlung eines Temperaturmesswerts $T_{BP}$ an die Auswertevorrichtung des Infrarot-Messsystems weitergeleitet, von der es - analog wie die Messsignale der Messpixel - einzeln und/oder in Kombination mit anderen Messsignalen anderer Referenzpixel ausgewertet wird oder ausgewertet werden kann. Unter Verwendung zumindest einer Mehrzahl von Referenzpixel des Infrarot-Detektorarrays kann somit eine Mehrzahl von Temperaturmesswerten $T_{BP}$ ermittelt werden.

Durch die unterschiedliche thermische Anbindung der Messpixel und der Referenzpixel an das Detektorarray-Substrat ergibt sich - trotz bevorzugt identischer physikalischer Wirkprinzipien oder Funktionsprinzipien der Messpixel und der Referenzpixel - ein wesentlicher Unterschied hinsichtlich des Detektionsvermögens von Messpixeln und Referenzpixeln. Während die Messpixel auf Grund der verhältnismäßig schlechten thermischen Leitfähigkeit $\lambda_{MP}$ ihrer Anbindung an das Detektorarray-Substrat für empfangene Infrarotstrahlung empfindlich sind, sind die Referenzpixel auf Grund der verhältnismäßig guten thermischen Leitfähigkeit $\lambda_{BP}$ ihrer Anbindung an das Detektorarray-Substrat für empfangene Infrarotstrahlung unempfindlich. Vorteilhaft stehen die Referenzpixel auf Grund ihrer verhältnismäßig guten thermischen Anbindung $\lambda_{BP}$ im thermischen Gleichgewicht mit den Bauteilen des Infrarot-Messsystems, insbesondere mit dem Detektorarray-Substrat sowie gegebenenfalls mit weiteren Bauteilen des Infrarot-Messsystems wie beispielsweise Elementen der Optik oder des Gehäuses.

In einer Ausführungsform des erfindungsgemäßen Infrarot-Messsystems ist die erste thermische Wärmeleitfähigkeit $\lambda_{MP}$ um einen Faktor 10, bevorzugt um einen Faktor 100, besonders bevorzugt um einen Faktor 1000 oder mehr, kleiner als die zweite thermische Wärmeleitfähigkeit $\lambda_{BP}$. Insbesondere bei einem Faktor von 1000 kann ein vorteilhafter, signifikanter Unterschied hinsichtlich des Detektionsvermögens von Messpixeln und Referenzpixeln erreicht werden.

In einer Ausführungsform des erfindungsgemäßen Infrarot-Messsystems ist die erste thermische Wärmeleitfähigkeit $\lambda_{MP}$ durch eine erste effektive Querschnittsfläche $A_{MP}$ und eine erste effektive Länge $L_{MP}$ von ersten Verbindungselementen realisiert, über die die Messpixel mit dem Detektorarray-Substrat verbunden sind, und ist die zweite thermische Wärmeleitfähigkeit $\lambda_{BP}$ durch eine zweite effektive Querschnittsfläche $A_{BP}$ und eine zweite effektive Länge $L_{BP}$ von zweiten Verbindungselementen realisiert, über die die Referenzpixel mit dem Detektorarray-Substrat verbunden sind, wobei sich die erste effektive Querschnittsfläche $A_{MP}$ der ersten Verbindungselemente von der zweiten effektiven Querschnittsfläche der zweiten Verbindungselemente $A_{BP}$ unterscheidet und/oder wobei sich die erste effektive Länge $L_{MP}$ der ersten Verbindungselemente von der zweiten effektiven Länge $L_{BP}$ der zweiten Verbindungselemente unterscheidet, sodass $A_{MP}/L_{MP} \neq A_{BP}/L_{BP}$.

Eine jeweilige "effektive Querschnittsfläche $A$" ist als die Summe der Querschnittsflächen der einzelnen Verbindungselemente definiert, über die ein jeweiliges Pixel an das Detektorarray-Substrat angebunden ist. Die "effektive Länge" entspricht der mittleren Länge der einzelnen Verbindungselemente, über die ein jeweiliges Pixel an das Detektorarray-Substrat angebunden ist.

Insbesondere lässt sich die thermische Wärmeleitfähigkeit der Anbindung von Referenzpixeln und Messpixeln über die Länge $L$ und/oder die Querschnittsfläche A der Verbindungselemente gemäß der Proportionalität $\lambda \sim A / L$ beeinflussen und bei der Fertigung festlegen. Das Verhältnis von Querschnittsfläche A zu Länge L definiert dabei die Wärmeleitfähigkeit der Anbindung von Messpixeln und Referenzpixeln an das Detektorarray-Substrat durch die geometrische Ausgestaltung der Verbindungselemente.

In einer Ausführungsform des erfindungsgemäßen Infrarot-Messsystems ist die zweite effektive Querschnittsfläche $A_{BP}$ der zweiten Verbindungselemente als ein Vielfaches der ersten effektiven Querschnittsfläche $A_{MP}$ der ersten Verbindungselemente realisiert, insbesondere beträgt sie das Zweifache, bevorzugt das Fünffache, besonders bevorzugt das Zehnfache oder mehr, und/oder ist die erste effektive Länge $L_{MP}$ der ersten Verbindungselemente als ein Vielfaches der zweiten effektiven Länge $L_{BP}$ der zweiten Verbindungselemente realisiert, insbesondere beträgt sie das Zweifache, bevorzugt das Fünffache, besonders bevorzugt das Zehnfache oder mehr.

In einer Ausführungsform des erfindungsgemäßen Infrarot-Messsystems ist die erste thermische Wärmeleitfähigkeit $\lambda_{MP}$ durch erste Verbindungselemente von zumindest 100 μm Länge realisiert und die zweite thermische Wärmeleitfähigkeit $\lambda_{BP}$ durch zweite Verbindungselemente von maximal 10 μm Länge.

In einer beispielhaften Ausführungsform des Infrarot-Messsystems kann die erste thermische Wärmeleitfähigkeit $\lambda_{MP}$ durch zwei erste Verbindungselemente von zumindest 100 μm Länge und die zweite thermische Wärmeleitfähigkeit $\lambda_{BP}$ durch zwanzig zweite Verbindungselemente von maximal 10 μm Länge realisiert sein.

In einer Ausführungsform des erfindungsgemäßen Infrarot-Messsystems sind die Messpixel und die Referenzpixel als P/N-Dioden (Thermodioden) realisiert.

Auf diese Weise kann ein Infrarot-Detektorarray vorteilhaft als Halbleitersensor unter Anwendung von Halbleitertechnologie realisiert werden. Ferner ist es unter Verwendung von P/N-Dioden vorteilhaft möglich, kleine Veränderungen der zu messenden Temperatur oder der Infrarotstrahlung zu erfassen und/oder Störsignale, die durch die Messelektronik des Halbleitersensors verursacht werden, zu eliminieren. Derartige Störsignale können beispielsweise eine Temperatur-Drift durch eine im Betrieb veränderte Temperatur der Messelektronik sein. Dazu kann in einer Ausführungsform des Infrarot-Messsystems neben den Messpixeln und den Referenzpixeln weiterhin zumindest ein zweites Referenzpixel vorhanden sein, insbesondere auf dem Detektorarray-Substrat vorhanden sein. Dieses zumindest eine zweite Referenzpixel ist mit einer dritten thermischen Wärmeleitfähigkeit $\lambda_{RP}$ an das Detektorarray-Substrat angebunden, wobei die dritte thermische Wärmeleitfähigkeit $\lambda_{RP}$ im Wesentlichen der zweiten thermischen Wärmeleitfähigkeit $\lambda_{BP}$ der Referenzpixel (Blindpixel) entspricht. So lassen sich die Messsignale der Messpixel und/oder der Referenzpixel als Differenzmesssignale gegenüber einem von dem zumindest einen zweiten Referenzpixel bereitgestellten Referenzsignal erfassen, beispielsweise als Spannungsdifferenz zwischen einem jeden Messpixel zum zumindest einen zweiten Referenzpixel und/oder als Spannungsdifferenz zwischen einem jeden Referenzpixel zum zumindest einen zweiten Referenzpixel. Auf diese Weise können Temperaturänderungen, insbesondere Änderungen in der Intensität der einfallenden Infrarotstrahlung, die zu kleinen Differenzen oder Änderungen in den Messsignalen führen (beispielsweise im mV-Bereich), mittels eines Differenzverstärkers vorteilhaft genau und hochaufgelöst erfasst werden. Insbesondere kann in einer derartigen Ausführungsform vorgesehen sein, dass die Messpixel und/oder die Referenzpixel unabhängig voneinander, insbesondere selektiv, mit dem Differenzverstärker verbunden werden können (beispielsweise unter Verwendung eines Multiplexers).

Jedes der Mehrzahl von Messpixeln und jedes der Mehrzahl von Referenzpixeln ist mit der Auswertevorrichtung des Infrarot-Messsystems direkt oder indirekt über weitere zwischengeschaltete Bauelemente signaltechnisch verbindbar. Insbesondere kann eine indirekte signaltechnische Verbindung der Pixel mit der Auswertevorrichtung auch über Schaltelemente, beispielsweise Multiplexer oder andere Selektionsschaltungen, die dazu ausgelegt sind, Detektionssignale mehrerer Pixel selektiv weiterzuleiten, realisiert werden. Auf diese Weise kann insbesondere erreicht werden, dass Detektionssignale einzelner Pixel oder einer Gruppe von Pixeln unabhängig von Detektionssignalen anderer Pixel an die Auswertevorrichtung weitergeleitet und von dieser ausgewertet werden können.

Unter der Auswertevorrichtung zum Empfangen und Auswerten von Messsignalen des Infrarot-Detektorarrays soll eine Vorrichtung verstanden werden, die zumindest einen Informationseingang zur Annahme von Messsignalen, eine Informationsverarbeitungseinheit zur Bearbeitung, insbesondere Auswertung der angenommenen Messsignale, sowie eine Informationsausgabe zur Weitergabe der bearbeiteten und/oder ausgewerteten Messsignale, insbesondere der Temperaturmesswerte $T_{MP}$ und $T_{BP}$, aufweist. Vorteilhaft weist die Auswertevorrichtung Komponenten auf, die zumindest einen Prozessor, einen Speicher und ein Betriebsprogramm mit Auswerte- und Berechnungsroutinen umfassen. Insbesondere können die elektronischen Bauteile der Auswertevorrichtung auf einer Platine (Leiterplatte) angeordnet sein, bevorzugt auf einer gemeinsamen Platine mit einer Steuervorrichtung des Infrarot-Messsystems zur Steuerung des Infrarot-Messsystems, und besonders bevorzugt in Form eines Mikrokontrollers. Des Weiteren können die Steuervorrichtung und die Auswertevorrichtung auch als ein einzelnes Bauteil ausgeführt sein. Die Auswertevorrichtung ist dazu vorgesehen, von dem Infrarot-Detektorarray bereitgestellte Messsignale, insbesondere von den mit der Auswertevorrichtung signaltechnisch verbindbaren, Mess- und Referenzpixeln des Infrarot-Detektorarrays bereitgestellte Messsignale, zu empfangen, auszuwerten und basierend auf Messsignalen zumindest einer Mehrzahl von Mess- und Referenzpixeln des Infrarot-Detektorarrays eine Auswertung der Temperatur des Messbereichs durchzuführen. Insbesondere ist die Auswertevorrichtung dazu vorgesehen, basierend auf Messsignalen zumindest einer (beliebigen) Mehrzahl von Mess- und Referenzpixeln des Infrarot-Detektorarrays eine Auswertung eines oder mehrerer Temperaturmesswerte $T_{MP}$ und $T_{BP}$ durchzuführen. Die ausgewerteten Temperaturmesswerte $T_{MP}$ und $T_{BP}$ können von der Auswertevorrichtung zur weiteren Verarbeitung und/oder zur Ausgabe, insbesondere zur Ausgabe an einen Benutzer des Infrarot-Messsystems mittels einer Ausgabevorrichtung und/oder zur Ausgabe an ein externes Gerät mittels einer Datenkommunikationsschnittstelle, bereitgestellt werden.

In einer Ausführungsform ist die Mehrzahl von Messpixeln Matrix-artig an der Oberfläche des Detektorarray-Substrats angeordnet. Die Anzahl von Messpixeln beträgt beispielsweise 80×80 Pixel, bevorzugt 360×240 Pixel, besonders bevorzugt 640×480 Pixel. Beliebige andere Werte sind denkbar. Die Anzahl von Messpixeln definiert die Auflösung des Infrarot-Messsystems, d.h. insbesondere die Auflösung eines mittels des Infrarot-Messsystems gemessenen Wärmebilds eines zu untersuchenden Gegenstands.

Die Anordnung der Referenzpixel auf dem Detektorarray-Substrat ist prinzipiell beliebig. Eine Anordnung auf der dem zu untersuchenden Gegenstand zugewandten Seite des Detektorarray-Substrats ist nicht zwangsläufig notwendig, jedoch vorteilhaft hinsichtlich einer wirtschaftlich günstigen Fertigung.

In einer Ausführungsform des erfindungsgemäßen Infrarot-Messsystems umgibt eine Anordnung von Referenzpixeln ein auf dem Infrarot-Detektorarray angeordnetes Array von Messpixeln, insbesondere rahmt die Anordnung von Referenzpixeln das auf dem Infrarot-Detektorarray angeordnete Array von Messpixeln ein.

Auf diese Weise kann eine besonders homogene und insbesondere lückenlose Erfassung von Infrarotstrahlung aus dem Raumwinkelbereich erfolgen, da das Infrarot-Detektorarray homogen und insbesondere lückenlos mit Messpixeln versehen ist. Indem die Referenzpixel um das Array von Messpixeln angeordnet sind, kann das Array von Messpixeln zentral, d.h. im Fokus der einfallenden Infrarotstrahlung, positioniert sein.

In einer Ausführungsform des erfindungsgemäßen Infrarot-Messsystems sind die Referenzpixel in einem auf dem Infrarot-Detektorarray angeordneten Array von Messpixeln angeordnet, insbesondere regelmäßig angeordnet, bevorzugt symmetrisch angeordnet, besonders bevorzugt symmetrisch zu zumindest einer Hauptsymmetrieachse des Infrarot-Detektorarrays angeordnet.

Unter "symmetrischer Anordnung" soll insbesondere verstanden werden, dass die Referenzpixel in symmetrischer, insbesondere punkt- und/oder spiegelsymmetrischer, Weise in dem Array von Messpixeln angeordnet sind. Insbesondere kann beispielsweise vorgesehen sein, dass Referenzpixel, die jeweils einen identischen Abstand zum geometrischen Mittelpunkt des Infrarot-Detektorarrays aufweisen, in im Wesentlichen ringförmigen Strukturen angeordnet sind. Vorteilhaft kann eine Anordnung von Referenzpixeln auch jeweils punktsymmetrisch zum geometrischen Mittelpunkt des Infrarot-Detektorarrays erfolgen, sodass beispielsweise eine Anordnung zweier erster Referenzpixel punktsymmetrisch bezüglich des geometrischen Mittelpunkts des Infrarot-Detektorarrays zu einer Anordnung zweier weiterer Referenzpixel erfolgt. Auf diese Weise wird durch die symmetrische Anordnung eine besonders einfache, strukturierte Anordnung der Referenzpixel gewährleistet, die eine besonders genaue und vorteilhaft lokal ortsaufgelöste Ermittlung von Temperaturmesswerten $T_{BP}$ erlaubt.

Das beschriebene Infrarot-Messsystem dient als Grundlage für das im Folgenden beschriebene Verfahren zur kontaktfreien Ermittlung einer Temperatur einer Oberfläche, insbesondere zur kontaktfreien Ermittlung einer Temperaturverteilung einer Oberfläche.

Das Verfahren dient vorrangig der Korrektur einer Pixel-zugehörigen Temperatur-Driftkomponente $T_{drift}$, um die sich die aus den Messignalen der jeweiligen Messpixel ermittelten Temperaturmesswerte $T_{MP}$ und/oder um die sich die aus den Messignalen der jeweiligen Referenzpixel ermittelten Temperaturmesswerte $T_{BP}$ zeitabhängig verschieben ("driften").

Eine wesentliche Einflussgröße auf diese Verschiebung oder auch "Temperatur-Drift" ist die Alterung des Infrarot-Detektorarrays in Folge von Detektorarrayintrinsischen Effekten wie insbesondere Ladungsverschiebungen in den einzelnen Mess- bzw. Referenzpixeln. Die Temperatur-Drift der einzelnen Pixel äußert sich insbesondere durch zeitlich veränderliche Abweichungen ("Offsets") der von den jeweiligen Pixeln ausgegebenen Messignale und somit auch durch zeitliche Abweichungen der aus den Messignalen der jeweiligen Pixel bestimmten Temperaturmesswerte ($T_{MP}$, $T_{BP}$). Anschaulich gesprochen werden bei unveränderter Temperatur des Infrarot-Detektorarrays sowie bei unverändertem Einfall von Infrarotstrahlung zeitabhängig unterschiedliche Temperaturmesswerte $T_{MP}$ und $T_{BP}$ ermittelt. Diese zeitabhängige Verschiebung der Temperaturmesswerte führt zur Ausgabe eines sich kontinuierlich verfälschenden Untersuchungsergebnisses der zu ermittelnden Temperatur der Oberfläche.

Gegenwärtig werden derartige, unerwünschte Effekte durch den Einsatz von Verschlusselementen wie beispielsweise eines "Shutters" korrigiert, sodass das Infrarot-Detektorarray beim Abgleich mit geschlossenem Verschlusselement eine möglichst homogene Fläche bekannter Temperatur untersucht. Dabei muss die Temperatur des Verschlusses bekannt sein. Mit Kenntnis dieser Temperatur kann anschließend die Temperatur-Drift korrigiert werden.

Das erfindungsgemäße Verfahren zur kontaktfreien Ermittlung einer Temperatur einer Oberfläche, insbesondere zur kontaktfreien Ermittlung einer Temperaturverteilung einer Oberfläche, geht dabei aus von dem bereits vorgestellten Infrarot-Messsystem, das zumindest aufweist: ein Infrarot-Detektorarray mit einem Detektorarray-Substrat und

- mit einer Mehrzahl von Messpixeln, die jeweils mit einer ersten thermischen Wärmeleitfähigkeit $\lambda_{MP}$ an das Detektorarray-Substrat angebunden sind, wobei die Messpixel für Infrarotstrahlung empfindlich sind und jeweils ein Messignal zur Ermittlung eines von einer Intensität der einfallenden Infrarotstrahlung abhängigen Temperaturmesswerts $T_{MP}$ bereitstellen, und

- mit einer Mehrzahl von Referenzpixeln, die jeweils mit einer zweiten thermischen Wärmeleitfähigkeit $\lambda_{BP}$ an das Detektorarray-Substrat angebunden sind, und die jeweils ein Messignal zur Ermittlung eines Temperaturmesswerts $T_{BP}$ bereitstellen,

und wobei das Verfahren zumindest folgende Schritte umfasst:

- Bestimmen der Temperaturmesswerte $T_{BP}$ einer Mehrzahl von Referenzpixeln;
- Bestimmen der Temperaturmesswerte $T_{MP}$ einer Mehrzahl von Messpixeln;
- Korrigieren von Temperaturmesswerten $T_{MP}$ um jeweils eine Pixel-zugehörige Temperatur-Driftkomponente $T_{drift}$.

Erfindungsgemäß sind die Referenzpixel als für Infrarotstrahlung im Wesentlichen unempfindliche Blindpixel realisiert, wobei die zweite thermische Wärmeleitfähigkeit $\lambda_{BP}$ größer ist als die erste thermische Wärmeleitfähigkeit $\lambda_{MP}$ und die Temperatur-Driftkomponenten $T_{drift}$ unter Verwendung von Temperaturmesswerten $T_{BP}$ bestimmt werden.

Die Auswertevorrichtung ist insbesondere dazu vorgesehen, das erfindungsgemäße Verfahren zur kontaktfreien Ermittlung einer Temperatur einer Oberfläche, insbesondere zur kontaktfreien Ermittlung einer Temperaturverteilung einer Oberfläche, durchzuführen.

Unter "Bestimmen der Temperaturmesswerte $T_{BP}$ einer Mehrzahl von Referenzpixeln" und "Bestimmen der Temperaturmesswerte $T_{MP}$ einer Mehrzahl von Messpixeln" ist insbesondere zu verstehen, dass zunächst von einer beliebigen Mehrzahl von Referenzpixeln bzw. einer beliebigen Mehrzahl von Messpixeln Messsignale bereitgestellt und der Auswertevorrichtung weitergeleitet werden.

Aus den von den Referenzpixeln bereitgestellten Messsignalen wertet die Auswertevorrichtung zu den entsprechenden Referenzpixeln jeweils einen Temperaturmesswert $T_{BP}$ aus. Entsprechend wertet die Auswertevorrichtung aus den von den Messpixeln bereitgestellten Messsignalen jeweils einen Temperaturmesswert $T_{MP}$ aus. Genauer betrachtet wertet die Auswertevorrichtung natürlich zu entsprechenden Referenzpixeln (Messpixeln) i jeweils einen Pixel-abhängigen Temperaturmesswert $T_{BP}^{i}$ ($T_{MP}^{i}$) aus. "Pixel-abhängig" bedeutet dabei insbesondere, dass der jeweilige Temperaturmesswert (Index "i") einem bestimmten Pixel (i) eindeutig zugeordnet ist. Im Folgenden werden allerdings sowohl die einzelnen Temperaturmesswerte - also die $T_{BP}^{i}$, $T_{MP}^{i}$ - sowie analog dazu auch die zu einem bestimmten Messpixel k ermittelten Temperatur-Driftkomponenten $T_{drift}^{k}$ als jeweilige Mengen $T_{BP}$, $T_{MP}$ sowie $T_{drift}$ zusammengefasst, um eine Verwirrung durch Indizes zu vermeiden.

Es sei darauf hingewiesen, dass die Mehrzahl von Messpixeln oder Referenzpixeln einer beliebigen Mehrzahl entsprechen kann, die nicht notwendigerweise der Gesamtheit der zur Verfügung stehenden Messpixel bzw. Referenzpixel entsprechen muss. Daher kann die Menge der ausgewerteten Pixel kleiner sein als die Menge der insgesamt auf dem Infrarot-Detektorarray verfügbaren Pixel.

Die einzelnen Temperaturmesswerte können in einer Ausführungsform des Verfahrens als die Temperatur der zu untersuchenden Oberfläche kennzeichnende Werte, beispielsweise in Grad Celsius (°C) oder Kelvin (K) oder dergleichen, realisiert sein.

Unter "Bestimmung der Temperatur-Driftkomponenten $T_{drift}$ unter Verwendung von Temperaturmesswerten $T_{BP}$" ist zu verstehen, dass zur Auswertung der jeweiligen, Pixel-abhängigen Temperatur-Driftkomponenten $T_{drift}$ für die Messpixel die Temperaturmesswerte $T_{BP}$ genutzt werden, die auf Basis der durch die Referenzpixel bereitgestellten Messsignale ermittelt werden. Das "Korrigieren von Temperaturmesswerten $T_{MP}$ um jeweils eine Pixel-zugehörige Temperatur-Driftkomponente $T_{drift}$" bezeichnet eine Korrektur, die für jedes Messpixel der Mehrzahl von Messpixeln angewandt wird, für die Temperaturmesswerte $T_{MP}$ bestimmt wurden. Dies kann in einer Ausführungsform des Verfahrens insbesondere dadurch erfolgen, dass auf einen zu einem jeweiligen Messpixel ermittelten Temperaturmesswert $T_{MP}$ eine für dieses Messpixel ermittelte zugehörige Temperatur-Driftkomponente $T_{drift}$ addiert oder subtrahiert wird, d.h. $T_{MP}^{corr} = T_{MP} + T_{drift}$. Auf diese Weise kann vorteilhaft eine von einer einfallenden Infrarotstrahlung unabhängige Temperatur-Messgröße (nämlich $T_{BP}$) zur Korrektur der Temperatur-Drift genutzt werden.

Insbesondere kann derart auf einen Verschlussmechanismus sowie eine Temperaturüberwachung dieses Verschlussmechanismus zur Korrektur der Temperatur-Drift der Messpixel verzichtet werden.

In einer Ausführungsform des erfindungsgemäßen Verfahrens werden die Temperatur-Driftkomponenten $T_{drift}$ in zeitlichen Abständen wiederholt, insbesondere regelmäßig, bevorzugt kontinuierlich oder quasi-kontinuierlich, bestimmt.

Durch die in zeitlichen Abständen wiederholte Bestimmung der Temperatur-Driftkomponenten $T_{drift}$ kann realisiert werden, dass eine ebenfalls wiederholte Korrektur der einem Benutzer des Infrarot-Messsystems ausgegebenen Temperatur, insbesondere eines Wärmebilds, um die Temperatur-Driftkomponenten $T_{drift}$ erfolgt. Vorteilhafterweise ist die Auswertevorrichtung dazu vorgesehen, durch eine hohe Verarbeitungsrate der Temperaturmesswerte eine regelmäßige, insbesondere eine kontinuierliche oder quasi-kontinuierliche, Bestimmung der Temperatur-Driftkomponenten $T_{drift}$, und somit eine regelmäßige, insbesondere eine kontinuierliche oder quasi-kontinuierliche, Korrektur der ermittelten Temperatur, insbesondere des Wärmebilds, zu ermöglichen. Unter "quasi-kontinuierlich" ist insbesondere zu verstehen, dass die sich wiederholende Korrektur eine geräteinterne Verarbeitungsdauer durch die Auswertevorrichtung bis zur fertigen Korrektur der Temperaturmesswerte $T_{MP}$ von weniger als 10 Sekunden, bevorzugt von weniger als 5 Sekunde, besonders bevorzugt von weniger als 1 Sekunde aufweist. Auf diese Weise wird bei einem Benutzer des Infrarot-Messsystems der Eindruck erweckt, dass die für die untersuchte Oberfläche ermittelte Temperatur, insbesondere das Wärmebild, unmittelbar, bevorzugt in Echtzeit und kontinuierlich, korrigiert wird.

Erfindungsgemäß wird zur Bestimmung der Temperatur-Driftkomponenten $T_{drift}$ ein Temperatur-Driftverhalten $m_{BP}$ der Referenzpixel aus Temperaturmesswerten $T_{BP}$ der Referenzpixel bestimmt.

Das Temperatur-Driftverhalten $m_{BP}$ der Referenzpixel stellt erfindungsgemäß ein geeignetes Maß für die Temperatur-Drift der Referenzpixel dar. Insbesondere kann das Temperatur-Driftverhalten $m_{BP}$ als ein mathematischer Ausdruck wie beispielsweise eine Funktion oder eine Konstante oder dergleichen repräsentiert sein. Da die Referenzpixel den Messpixeln im Aufbau prinzipiell ähnlich sind - von der Anbindung an das Detektorarray-Substrat abgesehen, kann das Temperatur-Driftverhalten der Messpixel als auch der Referenzpixel als vergleichbar angenommen werden. Vorteilhaft lässt sich auf diese Weise das Temperatur-Driftverhalten $m_{BP}$ der Referenzpixel als Grundlage für die Bestimmung der Temperatur-Driftkomponenten $T_{drift}$ heranziehen, indem beispielsweise ein quantifizierbares Temperatur-Driftverhalten $m_{BP}$ der Referenzpixel auf ein Temperatur-Driftverhalten der Messpixel übertragen wird.

In einer Ausführungsform des erfindungsgemäßen Verfahrens wird zur Bestimmung der Temperatur-Driftkomponenten $T_{drift}$ das Temperatur-Driftverhalten $m_{BP}$ der Referenzpixel als Proportionalitätskonstante zwischen initialen Messabweichungen $T_{BP,offset}$ der Referenzpixel und Temperaturmesswerten $T_{BP}$ bestimmt.

Unter der "initialen Messabweichung $T_{BP,offset}$ der Referenzpixel" ist insbesondere diejenige, Pixel-abhängige Messabweichung ("Offset") der Referenzpixel zu verstehen, die bei einer Werkskalibrierung des Infrarot-Messsystems ermittelt wird. Insbesondere verfügt die Auswertevorrichtung des Infrarot-Messsystems über die initialen Messabweichungen $T_{BP,offset}$ für jedes Referenzpixel des Infrarot-Detektorarrays. Vorteilhaft können diese aus einem Speicher der Auswertevorrichtung für jedes Referenzpixel des Infrarot-Detektorarrays abrufbar sein, wobei eine eindeutige Zuordnung von initialen Messabweichungen $T_{BP,offset}$ zu den Referenzpixeln gewährleistet ist. In einer Ausführungsform des Infrarot-Messsystems ist die Zuordnung der initialen Messabweichungen $T_{BP,offset}$ zu den Referenzpixeln in einer Tabelle als "initiale Offset-Karte" gespeichert.

Das Temperatur-Driftverhalten $m_{BP}$ der Referenzpixel wird in dem vorgeschlagenen Verfahren als Proportionalitätskonstante zwischen diesen initialen Messabweichungen $T_{BP,offset}$ der Referenzpixel sowie der ermittelten Temperaturmesswerte $T_{BP}$ bestimmt. Dazu werden zunächst durch die Zuordnung von initialen Messabweichungen $T_{BP,offset}$ zu den jeweiligen Referenzpixeln Wertepaare $(T_{BP}, T_{BP,offset})$ für jedes auszuwertende Referenzpixel gebildet. Bei Auftragung der ermittelten Temperaturmesswerte $T_{BP}$ auf der Ordinatenachse gegen die initialen Messabweichungen $T_{BP,offset}$ auf der Abszissenachse ergibt sich eine Datenmenge ("Punktwolke"), die sich bevorzugt durch eine Gerade modellieren ("anfitten") lässt, beispielsweise unter Verwendung eines Least-Square-Fits oder dergleichen. Anschließend kann das Temperatur-Driftverhalten $m_{BP}$ der Blindpixel besonders einfach und besonders genau aus der Geradensteigung (Proportionalitätskonstante) dieser Geraden ermittelt werden. Insbesondere gilt für diese Gerade die allgemeine Gleichung

$$T_{BP} = m_{BP} \cdot (T_{BP,offset}^{0} - T_{BP,offset})$$

mit einem Abszissenachsenabschnitt $T_{BP,offset}^{0}$. Es sei darauf hingewiesen, dass das Bild der Steigungsbestimmung unter anderem der Veranschaulichung dient. Insbesondere kann das Temperatur-Driftverhalten $m_{BP}$ der Referenzpixel als Proportionalitätskonstante auch mittels mathematischer Verfahren wie beispielsweise einer Ausgleichsrechnung oder einer linearen Regressionsrechnung berechnet werden.

Dem Verfahren liegt die Erkenntnis zu Grunde, dass sich das Temperatur-Driftverhalten $m_{BP}$ der Referenzpixel besonders vorteilhaft als von der initialen Messabweichung $T_{BP,offset}$ des jeweiligen Referenzpixels abhängiges Maß bestimmen lässt. Dies bedeutet, dass diejenigen Referenzpixel, die zur Zeit der Werkskalibrierung bereits eine verhältnismäßig große initiale Messabweichung $T_{BP,offset}$ (Offset) aufweisen, einer stärkeren Temperatur-Drift unterliegen als Referenzpixel, die zur Zeit der Werkskalibrierung lediglich eine (betragsmäßig) kleine initiale Messabweichung $T_{BP,offset}$ aufweisen.

Vorteilhaft kann auf diese Weise eine besonders einfache und schnell durchführbare Bestimmung des Temperatur-Driftverhaltens $m_{BP}$ der Referenzpixel realisiert werden. Unter Verwendung dieses Bestimmungsverfahrens kann ferner eine Anforderung an die Auswertevorrichtung hinsichtlich ihrer Rechenleistung besonders gering gehalten werden und somit Kosten eingespart werden.

In einer Ausführungsform des erfindungsgemäßen Verfahrens wird zur Bestimmung der Temperatur-Driftkomponenten $T_{drift}$ das Temperatur-Driftverhalten $m_{BP}$ der Referenzpixel als Proportionalitätskonstante zwischen Empfindlichkeiten der initialen Messabweichungen $\partial T_{BP,offset}$ gegenüber Alterungseinflüssen der Referenzpixel und Temperaturmesswerten $T_{BP}$ der Referenzpixel bestimmt.

Der Ausdruck "Empfindlichkeiten der initialen Messabweichungen $\partial T_{BP,offset}$ gegenüber Alterungseinflüssen der Referenzpixel" (im Folgenden kürzer "Empfindlichkeiten der initialen Messabweichungen $\partial T_{BP,offset}$") ist insbesondere ein Maß für die Veränderlichkeit der initialen Messabweichung $T_{BP,offset}$ (Offsetwerte) der Referenzpixel auf Grund eines äußeren physikalischen Einflusses, der eine künstlich beschleunigte Alterung der Referenzpixel bewirkt ("die Änderungsanfälligkeit der Offsetwerte unter Alterungseinfluss"). Anders ausgedrückt bezeichnet die Empfindlichkeiten der initialen Messabweichungen $\partial T_{BP,offset}$ eine Anfälligkeit eines Referenzpixels, auf einen äußeren physikalischen Einflusses mit einer Änderung der initialen Messabweichung $T_{BP,offset}$ zu reagieren. Beispielsweise kann ein derartiger äußerer physikalischer Einfluss durch eine Hochtemperaturlagerung, eine hohe Bestromung des Infrarot-Detektorarrays oder dergleichen ausgeübt werden.

Unter "Empfindlichkeiten der initialen Messabweichungen $\partial T_{BP,offset}$ gegenüber Alterungseinflüssen der Referenzpixel" sind insbesondere diejenigen, Pixel-abhängigen Empfindlichkeiten der initialen Messabweichungen $\partial T_{BP,offset}$ gegenüber Alterungseinflüssen der Referenzpixel zu verstehen, die bei einer Werkskalibrierung des Infrarot-Messsystems ermittelt werden. Insbesondere verfügt die Auswertevorrichtung des Infrarot-Messsystems über die Empfindlichkeiten der initialen Messabweichungen $\partial T_{BP,offset}$ gegenüber Alterungseinflüssen für jedes Referenzpixel des Infrarot-Detektorarrays. Vorteilhaft können diese aus einem Speicher der Auswertevorrichtung für jedes Referenzpixel des Infrarot-Detektorarrays abrufbar sein, wobei eine eindeutige Zuordnung von Empfindlichkeiten der initialen Messabweichungen $\partial T_{BP,offset}$ zu den Referenzpixeln gewährleistet ist. In einer Ausführungsform des Infrarot-Messsystems ist die Zuordnung der Empfindlichkeiten der initialen Messabweichungen $\partial T_{BP,offset}$ zu den Referenzpixeln in einer Tabelle als "initiale Driftanfälligkeit-Karte" gespeichert.

Das Temperatur-Driftverhalten $m_{BP}$ der Referenzpixel wird in dem vorgeschlagenen Verfahren als Proportionalitätskonstante zwischen diesen Empfindlichkeiten der initialen Messabweichungen $\partial T_{BP,offset}$ der Referenzpixel sowie der ermittelten Temperaturmesswerte $T_{BP}$ der Referenzpixel bestimmt. Dazu werden zunächst durch die Zuordnung von Empfindlichkeiten der initialen Messabweichungen $\partial T_{BP,offset}$ zu den jeweiligen Referenzpixeln Wertepaare ($T_{BP}$, $\partial T_{BP,offset}$) für jedes auszuwertende Referenzpixel gebildet. Bei Auftragung der ermittelten Temperaturmesswerte $T_{BP}$ auf der Ordinatenachse gegen die Empfindlichkeiten der initialen Messabweichungen $\partial T_{BP,offset}$ auf der Abszissenachse ergibt sich eine Datenmenge ("Punktwolke"), die sich bevorzugt durch eine Gerade modellieren (anfitten) lässt, beispielsweise unter Verwendung eines Least-Square-Fits oder dergleichen. Anschließend kann das Temperatur-Driftverhalten $m_{BP}$ der Blindpixel besonders einfach und besonders genau aus der Geradensteigung (Proportionalitätskonstante) dieser Geraden ermittelt werden. Insbesondere gilt für diese Gerade die allgemeine Gleichung

$$T_{BP} = m_{BP} \cdot (\partial T_{BP,offset}{}^0 - \partial T_{BP,offset})$$

mit einem Abszissenachsenabschnitt $\partial T_{BP,offset}{}^0$. Es sei darauf hingewiesen, dass auch hier das Bild der Steigungsbestimmung unter anderem der Veranschaulichung dient. Insbesondere kann das Temperatur-Driftverhalten $m_{BP}$ der Referenzpixel als Proportionalitätskonstante auch mittels mathematischer Verfahren wie beispielsweise einer Ausgleichsrechnung oder einer linearen Regressionsrechnung berechnet werden.

Dem Verfahren liegt die Erkenntnis zu Grunde, dass sich das Temperatur-Driftverhalten $m_{BP}$ der Referenzpixel besonders vorteilhaft als von der Empfindlichkeit der initialen Messabweichungen $\partial T_{BP,offset}$ des jeweiligen Referenzpixels abhängiges Maß bestimmen lässt. Dies bedeutet, dass diejenigen Referenzpixel, die zur Zeit der Werkskalibrierung bereits Anzeichen für eine stärkere Empfindlichkeit ihrer initialen Messabweichung gegenüber Alterungseinflüssen zeigen, einer stärkeren Temperatur-Drift unterliegen als Referenzpixel, die zur Zeit der Werkskalibrierung kaum Anzeichen für eine derartige Empfindlichkeit aufweisen.

Vorteilhaft kann auf diese Weise eine besonders einfache und schnell durchführbare Bestimmung des Temperatur-Driftverhaltens $m_{BP}$ der Referenzpixel realisiert werden. Unter Verwendung dieses Bestimmungsverfahrens kann ferner eine Anforderung an die Auswertevorrichtung hinsichtlich ihrer Rechenleistung besonders gering gehalten werden und somit Kosten eingespart werden.

In einer Ausführungsform des erfindungsgemäßen Verfahrens wird zur Bestimmung der Temperatur-Driftkomponenten $T_{drift}$ ein Temperatur-Driftverhalten $m_{MP}$ von Messpixeln in einen mathematischen Zusammenhang mit einem Temperatur-Driftverhalten $m_{BP}$ von Referenzpixeln gesetzt und aus dem mathematischen Zusammenhang das Temperatur-Driftverhalten $m_{MP}$ von Messpixeln bestimmt.

Insbesondere kann derart auf besonders einfache Weise ein Temperatur-Driftverhalten $m_{MP}$ der Messpixel unmittelbar aus dem bereits bestimmten Temperatur-Driftverhalten $m_{BP}$ der Referenzpixel ermittelt werden. Unter einem "mathematischen Zusammenhang" ist dabei ein beliebiger funktioneller Zusammenhang

$$m_{MP} := f(m_{BP})$$

zwischen den beiden Temperatur-Driftverhalten zu verstehen, beispielsweise in Form einer mathematischen Funktion, einer Umrechnungsvorschrift oder dergleichen.

In einer Ausführungsform des erfindungsgemäßen Verfahrens wird das Temperatur-Driftverhalten $m_{MP}$ der Messpixel gleich dem Temperatur-Driftverhalten $m_{BP}$ der Referenzpixel gesetzt.

Vorteilhaft werden auf diese Weise das Temperatur-Driftverhalten $m_{MP}$ der Messpixel in einen besonders einfachen mathematischen Zusammenhang zu dem Temperatur-Driftverhalten $m_{BP}$ der Referenzpixel gesetzt, bei dem gilt:

$$m_{MP} := m_{BP}.$$

Vorteilhaft kann auf diese Weise eine besonders einfache und schnell durchführbare Bestimmung des Temperatur-Driftverhaltens $m_{MP}$ der Messpixel aus dem Temperatur-Driftverhalten $m_{MP}$ der Referenzpixel realisiert werden. Unter Verwendung dieses Bestimmungsverfahrens kann ferner eine Anforderung an die Auswertevorrichtung hinsichtlich ihrer Rechenleistung besonders gering gehalten werden und somit Kosten eingespart werden.

In einer Ausführungsform des erfindungsgemäßen Verfahrens werden die Temperatur-Driftkomponenten $T_{drift}$ aus dem Temperatur-Driftverhalten $m_{MP}$ von Messpixeln bestimmt.

Das Temperatur-Driftverhalten $m_{MP}$ der Messpixel kann vorteilhaft zur Bestimmung der Temperatur-Driftkomponenten $T_{drift}$ der Messpixel genutzt werden, da es als ein Maß für die Temperatur-Drift angesehen werden kann. Somit kann es auch als ein Maß für die Temperatur-Drift der Temperaturmesswerte $T_{MP}$ der Messpixel angesehen werden. In einer Ausführungsform des Verfahrens kann das Temperatur-Driftverhalten $m_{MP}$ der Messpixel über einen mathematischen Zusammenhang aus dem Temperatur-Driftverhalten $m_{MP}$ bestimmt werden.

In einer Ausführungsform des erfindungsgemäßen Verfahrens werden die Temperatur-Driftkomponenten $T_{drift}$ aus dem Temperatur-Driftverhalten $m_{MP}$ bestimmt, indem die Temperatur-Driftkomponenten $T_{drift}$ der jeweiligen Messpixel in Form einer Funktion als Produkt von Temperatur-Driftverhalten $m_{MP}$ und initialen Messabweichungen $T_{MP,offset}$ der jeweiligen Messpixel berechnet werden.

Diese Ausführungsform des Verfahrens ergibt sich in Analogie zur Bestimmung des Temperatur-Driftverhaltens $m_{BP}$ der Referenzpixel als Proportionalitätskonstante zwischen initialen Messabweichungen $T_{BP,offset}$ der Referenzpixel und Temperaturmesswerten $T_{BP}$. Wie bereits bei den Referenzpixeln analog definiert, ist unter der "initialen Messabweichung $T_{MP,offset}$ der Messpixel" insbesondere diejenige, Pixel-abhängige Messabweichung der Messpixel zu verstehen, die bei einer Werkskalibrierung des Infrarot-Messsystems ermittelt wird. Insbesondere verfügt die Auswertevorrichtung des Infrarot-Messsystems über die initialen Messabweichungen $T_{MP,offset}$ für jedes Messpixel des Infrarot-Detektorarrays, die vorteilhaft aus einem Speicher der Auswertevorrichtung für jedes Messpixel abrufbar sind. Dabei besteht auch für die Messpixel eine eindeutige Zuordnung von initialen Messabweichungen $T_{MP,offset}$ zu den Messpixeln. Somit kann für die Messpixel der jeweils zugehörige Wert der initialen Messabweichung $T_{MP,offset}$ bestimmt werden. In einer Ausführungsform des Infrarot-Messsystems ist die Zuordnung der initialen Messabweichungen $T_{MP,offset}$ zu den Messpixeln ebenfalls in einer Tabelle, insbesondere in der sog. "initialen Offset-Karte", gespeichert.

Zur Bestimmung der Temperatur-Driftkomponenten $T_{drift}$ werden zunächst zu jedem auszuwertenden - d.h. hinsichtlich einer Temperatur-Driftkomponente zu korrigierenden - Messpixel die zugehörigen initialen Messabweichungen $T_{MP,offset}$ bestimmt. Anschließend kann eine zu einem Messpixel gehörende Temperatur-Driftkomponente $T_{drift}$ als Produkt aus dem Temperatur-Driftverhalten $m_{MP}$ und der zu dem entsprechenden Messpixel gehörenden initialen Messabweichung $T_{MP,offset}$ berechnet werden:

$$T_{drift} = m_{MP} \cdot (T_{MP,offset}{}^{0} - T_{MP,offset}).$$

Diese Gleichung stellt ebenfalls eine Geradengleichung dar, mit dem konstanten Parameter $T_{MP,offset}{}^{0}$. $T_{MP,offset}{}^{0}$ kann dabei insbesondere auch Null sein.

Vorteilhaft kann auf diese Weise eine besonders einfache und schnell durchführbare Bestimmung der Temperatur-Driftkomponenten $T_{drift}$ der Messpixel realisiert werden. Unter Verwendung dieses Bestimmungsverfahrens kann ferner eine Anforderung an die Auswertevorrichtung hinsichtlich ihrer Rechenleistung besonders gering gehalten und somit Kosten eingespart werden.

In einer Ausführungsform des erfindungsgemäßen Verfahrens werden die Temperatur-Driftkomponenten $T_{drift}$ aus dem Temperatur-Driftverhalten $m_{MP}$ bestimmt, indem die Temperatur-Driftkomponenten $T_{drift}$ der jeweiligen Messpixel in Form einer Funktion als Produkt von Temperatur-Driftverhalten $m_{MP}$ und Empfindlichkeiten der initialen Messabweichungen $\partial T_{BP,offset}$ gegenüber Alterungseinflüssen der jeweiligen Referenzpixel berechnet werden.

Diese Ausführungsform des Verfahrens ergibt sich in Analogie zur Bestimmung des Temperatur-Driftverhaltens $m_{BP}$ der Referenzpixel als Proportionalitätskonstante zwischen Empfindlichkeiten der initialen Messabweichungen $\partial T_{BP,offset}$ der Referenzpixel und Temperaturmesswerten $T_{BP}$. Wie bereits bei den Referenzpixeln analog definiert, ist unter der "Empfindlichkeiten der initialen Messabweichungen $\partial T_{MP,offset}$ der Messpixel" insbesondere diejenige, Pixel-abhängigen Empfindlichkeiten der initialen Messabweichungen $\partial T_{MP,offset}$ gegenüber Alterungseinflüssen der Messpixel zu verstehen, die bei einer Werkskalibrierung des Infrarot-Messsystems ermittelt werden. Insbesondere verfügt die Auswertevorrichtung des Infrarot-Messsystems über die Empfindlichkeiten der initialen Messabweichungen $\partial T_{MP,offset}$ für jedes Messpixel des Infrarot-Detektorarrays, die vorteilhaft aus einem Speicher der Auswertevorrichtung für jedes Messpixel abrufbar sind. Dabei besteht auch für die Messpixel eine eindeutige Zuordnung von Empfindlichkeiten der initialen Messabweichungen $\partial T_{MP,offset}$ zu den Messpixeln. Somit kann für die Messpixel der jeweils zugehörige Wert der Empfindlichkeiten der initialen Messabweichungen $\partial T_{MP,offset}$ bestimmt werden. In einer Ausführungsform des Infrarot-Messsystems ist die Zuordnung der Empfindlichkeiten der initialen Messabweichungen $\partial T_{MP,offset}$ zu den Messpixeln ebenfalls in einer Tabelle insbesondere in derselben Tabelle, gespeichert ("initiale Driftanfälligkeit-Karte").

Zur Bestimmung der Temperatur-Driftkomponenten $T_{drift}$ werden zunächst zu jedem auszuwertenden Messpixel die zugehörigen Empfindlichkeiten der initialen Messabweichungen $\partial T_{MP,offset}$ bestimmt. Anschließend kann eine zu einem Messpixel gehörende Temperatur-Driftkomponente $T_{drift}$ als Produkt aus dem Temperatur-Driftverhalten $m_{MP}$ und der zu dem entsprechenden Messpixel gehörenden Empfindlichkeiten der initialen Messabweichungen $\partial T_{MP,offset}$ berechnet werden:

$$T_{drift} = m_{MP} \cdot (\partial T_{MP,offset}^{0} - \partial T_{MP,offset}).$$

Diese Gleichung stellt ebenfalls eine Geradengleichung dar, mit dem konstanten Parameter $\partial T_{MP,offset}^{0}$. $\partial T_{MP,offset}^{0}$ kann dabei insbesondere auch Null sein.

Vorteilhaft kann auf diese Weise eine besonders einfache und schnell durchführbare Bestimmung der Temperatur-Driftkomponenten $T_{drift}$ der Messpixel realisiert werden. Unter Verwendung dieses Bestimmungsverfahrens kann ferner eine Anforderung an die Auswertevorrichtung hinsichtlich ihrer Rechenleistung besonders gering gehalten und somit Kosten eingespart werden.

In einer Ausführungsform des erfindungsgemäßen Verfahrens wird in einem weiteren Verfahrensschritt ein Einfall von Infrarotstrahlung auf das Infrarot-Detektorarray mittels eines Verschlussmechanismus des Infrarot-Messsystems unterbunden und die Temperaturmesswerte $T_{MP}$ werden jeweils um eine Pixel-abhängige Abweichung $\Delta T_{MP}^{blind}$ von einem Mittelwert $<T_{MP}^{blind}>$ aller bei unterbundenem Einfall von Infrarotstrahlung gemessenen Temperaturmesswerten $T_{MP}^{blind}$ korrigiert.

Da die Temperatur-Drift im nicht idealen Anwendungsfall für jedes Pixel - Messpixel und Referenzpixel - individuell jeweils geringfügig unterschiedlich sein kann, kann auf diese Weise vorteilhaft eine weitere Korrektur, insbesondere eine Homogenisierung bzw. eine Verringerung der Varianz, der nach erfindungsgemäßem Verfahren bereits um die Temperatur-Driftkomponente $T_{drift}$ korrigierten Temperaturmesswerte $T_{MP}$ erfolgen. Dazu wird in einem weiteren Verfahrensschritt zumindest zeitweise ein Einfall von Infrarotstrahlung auf das Infrarot-Detektorarray mittels eines Verschlussmechanismus des Infrarot-Messsystems, insbesondere mittels eines Shutters, unterbunden. Die daraufhin ermittelten (und gegebenenfalls bereits korrigierten) Temperaturmesswerte $T_{MP}^{blind}$ der Messpixel werden um einen Temperaturwert, der der Temperatur des Verschlussmechanismus entspricht, schwanken. Ein aus allen bei unterbundenem Einfall von Infrarotstrahlung gemessenen Temperaturmesswerte $T_{MP}^{blind}$ gebildeter Mittelwert $<T_{MP}^{blind}>$ wird dieser Temperatur des Verschlussmechanismus sehr nahekommen. Die Berechnung einer Pixel-abhängigen Abweichung $\Delta T_{MP}^{blind}$ von dem Mittelwert $<T_{MP}^{blind}>$ für alle Messpixel erlaubt daher, jedes Messpixel um genau diese Abweichung zu korrigieren und somit die von der Gesamtheit aller Messpixel ausgegebenen Temperaturmesswerte $T_{MP}$ zu homogenisieren und dem Mittelwert anzugleichen.

Dieser weitere Verfahrensschritt der Homogenisierung kann im Anschluss an die Korrektur der Temperaturmesswerte $T_{MP}$ der Messpixel um die Temperatur-Driftkomponente $T_{drift}$ erfolgen. Alternativ oder zusätzlich kann die Homogenisierung auch zu einem beliebigen anderen Zeitpunkt erfolgen, beispielsweise vor der Berechnung der Temperatur-Driftkomponente $T_{drift}$.

Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreicher Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:

Figur 1        eine Ausführungsform eines erfindungsgemäßen Infrarot-Messsystems in einer perspektivischen Frontansicht,

Figur 2        eine Ausführungsform eines erfindungsgemäßen Infrarot-Messsystems in einer perspektivischen Rückansicht,

Figur 3        eine perspektivische, schematische Rückansicht des erfindungsgemäßen Infrarot-Messsystems vor einem zu vermessenden Gegenstand,

Figur 4       eine schematische Darstellung der zur Ausführung des erfindungsgemäßen Verfahrens erforderlichen Komponenten des erfindungsmäßen Infrarot-Messsystems,

Figur 5a       eine stark vergrößerte, schematische Aufsicht auf Messpixel und Referenzpixel eines Teils eines erfindungsgemäßen Infrarot-Detektorarrays,

Figur 5b       eine schematische Darstellung eines Schnitts durch ein Messpixel,

Figur 5c       ein vergrößerter Ausschnitt aus Figur 5a,

Figur 5d       ein der in Figur 5a dargestellten Aufsicht entsprechendes elektrisches Ersatzschaltbild des Infrarot-Detektorarrays,

Figur 6a       eine schematische Aufsicht auf eine Ausführungsform des erfindungsgemäßen Infrarot-Detektorarrays,

Figur 6b       schematische Darstellungen von Anordnungen von Messpixeln und Referenzpixeln auf dem Infrarot-Detektorarray,

Figur 7       eine Ausführungsform des erfindungsgemäßen Verfahrens in einem Verfahrensdiagramm,

Figur 8a       eine "initiale Offset-Karte", die initiale Messabweichungen $T_{BP,offset}$ und $T_{MP,offset}$ zu Referenzpixel bzw. Messpixeln des Infrarot-Detektorarrays zuordnet,

Figur 8b       eine "initiale Driftanfälligkeit-Karte", die Empfindlichkeiten der initialen Messabweichungen $\partial T_{BP,offset}$ und $\partial T_{MP,offset}$ zu den Referenzpixeln bzw. Messpixeln des Infrarot-Detektorarrays zuordnet,

Figur 9       eine schematische Darstellung der erfindungsgemäßen Auswerte-Verfahrensschritte bei Nutzung der initialen Messabweichungen $T_{BP,offset}$ und $T_{MP,offset}$ zur Bestimmung der Temperatur-Driftkomponenten $T_{drift}$,

Figur 10       eine schematische Darstellung der erfindungsgemäßen Auswerte-Verfahrensschritte bei Nutzung der initialen Driftanfälligkeiten $\partial T_{BP,offset}$ und $\partial T_{MP,offset}$ zur Bestimmung der Temperatur-Driftkomponenten $T_{drift}$,

Figur 11a,b       eine schematische Darstellung der erfindungsgemäßen Auswerte-Verfahrensschritte zur Homogenisierung von Temperaturmesswerten $T_{MP}$ (a) vor Homogenisierung und (b) nach Homogenisierung der Temperaturmesswerte $T_{MP}$.

Beschreibung der Ausführungsbeispiele

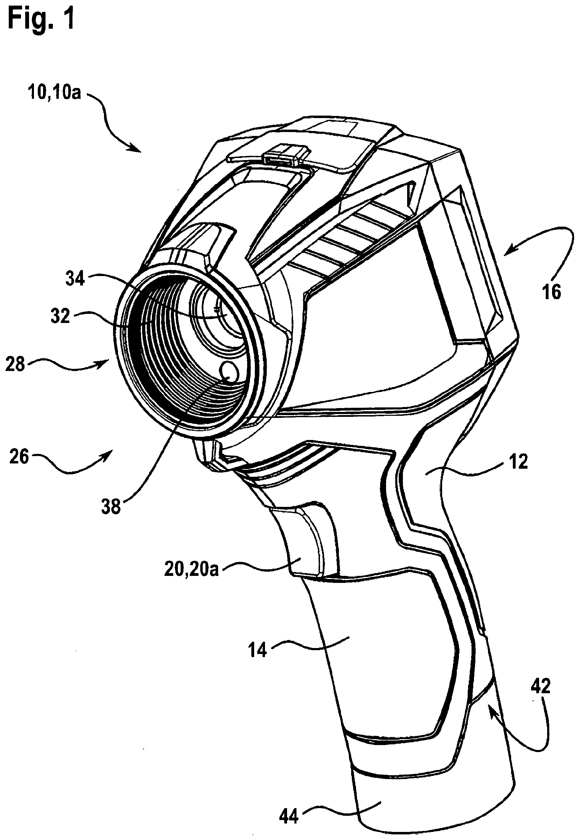

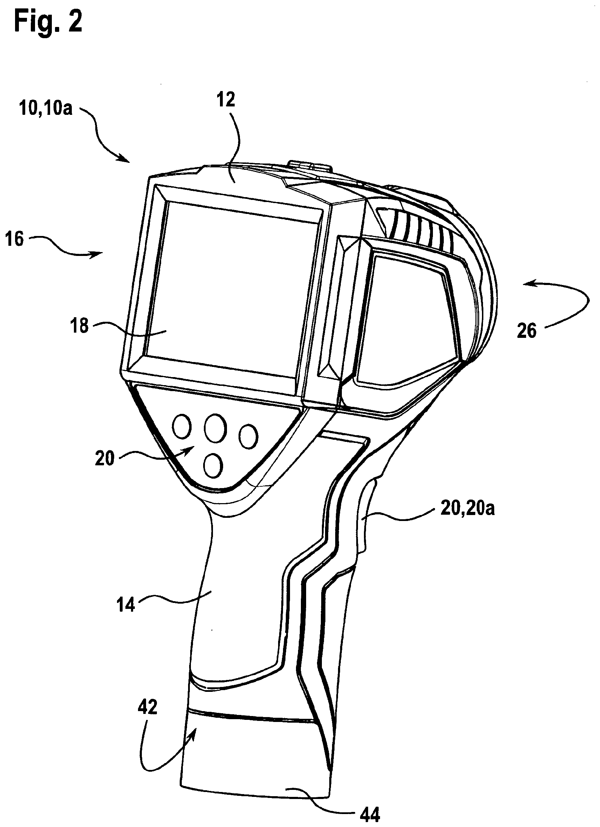

Im Folgenden wird ein erfindungsgemäßes Infrarot-Messsystem 10 in Form einer handgehaltenen Wärmebildkamera 10a vorgestellt. Figur 1 und Figur 2 zeigen eine beispielhafte Ausführungsform dieser Wärmebildkamera 10a in perspektivischer Frontansicht bzw. in einer perspektivischen Rückansicht. Die Wärmebildkamera 10a umfasst ein Gehäuse 12 mit einem Griff 14. Mit dem Griff 14 kann die Wärmebildkamera 10a während ihrer Benutzung bequem in einer Hand gehalten werden. Das Gehäuse 12 der Wärmebildkamera 10a weist weiterhin auf einer einem Benutzer während der Benutzung der Wärmebildkamera 10a zugewandten Seite 16 eine Ausgabevorrichtung in Form eines berührungssensitiven Displays 18 sowie Bedienelemente 20 zur Benutzereingabe und Steuerung der Wärmebildkamera 10a auf. Insbesondere weist die Wärmebildkamera 10a einen Trigger 20a auf, mit dem ein Benutzer eine kontaktfreie Ermittlung einer Temperatur einer zu untersuchenden Oberfläche 22 eines Gegenstands 24, insbesondere eine Temperaturverteilung einer Oberfläche 22 eines Gegenstands 24, auslösen kann.

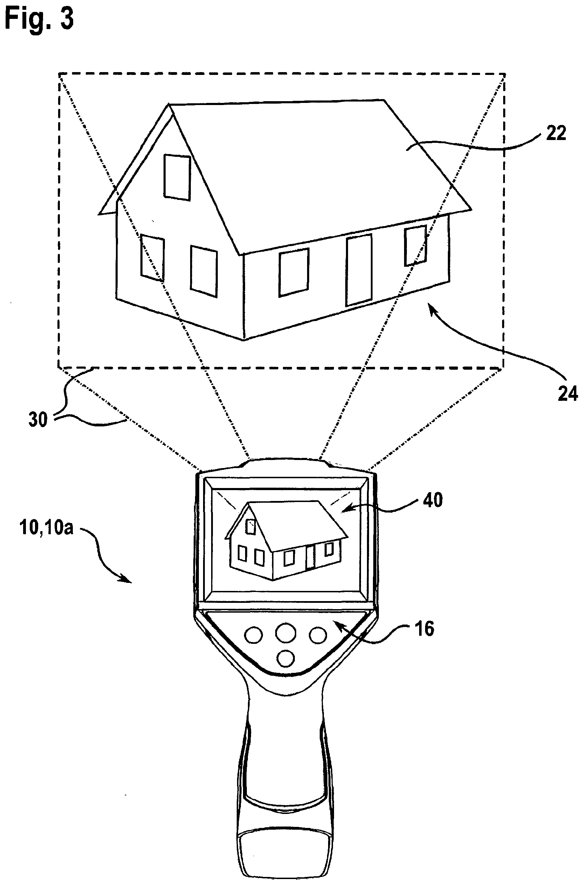

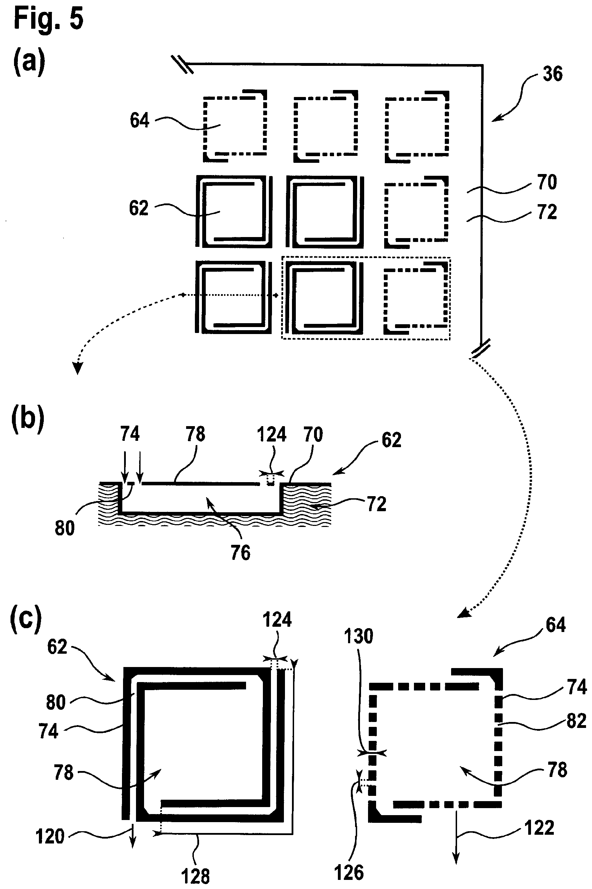

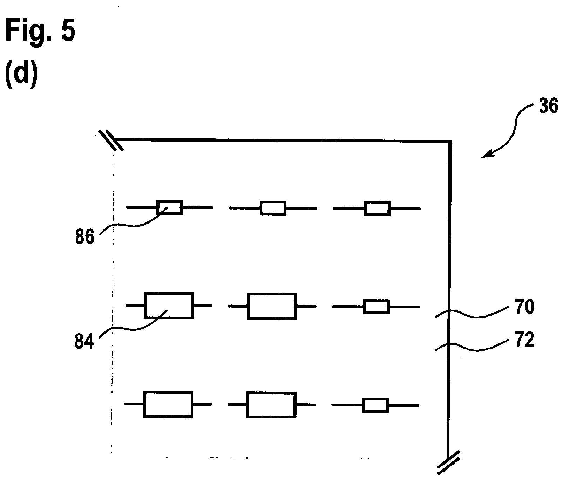

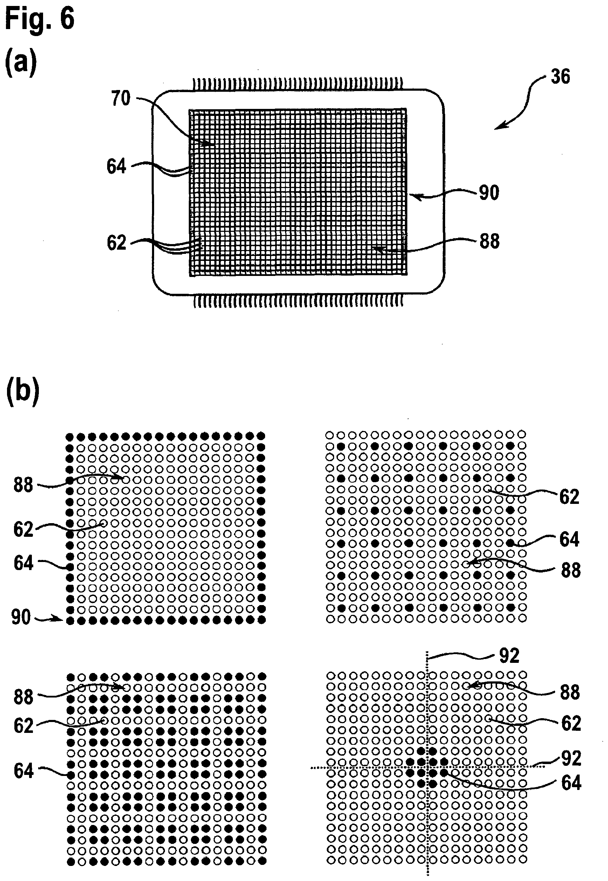

Auf der einem Benutzer abgewandten Seite 26 des Gehäuses 12 ist eine Eintrittsöffnung 28 in dem Gehäuse 12 vorgesehen, durch die von dem Gegenstand 24 ausgestrahlte, insbesondere in einem Messbereich 30 (vergleiche Figur 3 gestrichelter Raumwinkel) von einer Oberfläche 22 des Gegenstands 24 ausgestrahlte, Wärmestrahlung in die Wärmebildkamera 10a eintreten kann. Unmittelbar hinter der Eintrittsöffnung 28 befindet sich in einem Streulicht mindernden Lichttubus 36 ein Linsensystem 34 als Optik. Das Linsensystem 34 ist für Strahlung im mittleren Infrarotbereich durchlässig und dient der Fokussierung von Wärmestrahlung auf ein Infrarot-Detektorarray 36 (vgl. insbesondere Erläuterungen zu Figur 5 und Figur 6) der Wärmebildkamera 10a.

Auf der einem Benutzer während der Benutzung der Wärmebildkamera 10a abgewandten Seite 26 des Gehäuses 12 ist in einem Ausführungsbeispiel der Wärmebildkamera 10a ferner eine im visuellen Spektrum arbeitende Kamera 38 vorgesehen, mittels der ein visuelles Bild des Messbereichs 30 aufgenommen wird. Dieses visuelle Bild kann gemeinsam mit einem aus einer von dem Benutzer initiierten Temperaturmessung generierten Wärmebild 40 ausgegeben werden, insbesondere zumindest teilweise mit dem Wärmebild 40 überlagert oder überblendet ausgegeben werden. Die Kamera 38 kann beispielsweise als ein CCD-Bildsensor realisiert sein.

Auf der Unterseite der Wärmebildkamera 10a weist der Griff 14 eine Aufnahme 42 zur Aufnahme eines Energiespeichers 44 auf, der beispielhaft in Form eines aufladbaren Akkumulators oder in Form von Batterien ausgeführt sein kann.

Die Wärmebildkamera 10a dient dazu, ein Wärmebild 40 eines zu untersuchenden Gegenstands 24 aufzunehmen, wie dies in Figur 3 schematisch dargestellt ist. Nach Einschalten der Wärmebildkamera 10a detektiert die Wärmebildkamera 10a in dem Messbereich 30 von der Oberfläche 22 des Gegenstands 24 abgestrahlte Wärmestrahlung berührungslos. Die von der Wärmebildkamera 10a ermittelte Temperatur charakterisiert die Temperatur der Oberfläche 22 und ist in diesem Ausführungsbeispiel als eine Temperaturverteilung zu verstehen, die bevorzugt in Form eines ortsaufgelösten Wärmebilds 40 an den Benutzer der Wärmebildkamera 10a ausgegeben wird. In Folge der Betätigung des Triggers 20a durch den Benutzer der Wärmebildkamera 10a wird in diesem Ausführungsbeispiel ein um eine Temperatur-Driftkomponente $T_{drift}$ 46 korrigiertes Wärmebild 40 erzeugt, auf dem Display 18 ausgegeben und gespeichert.

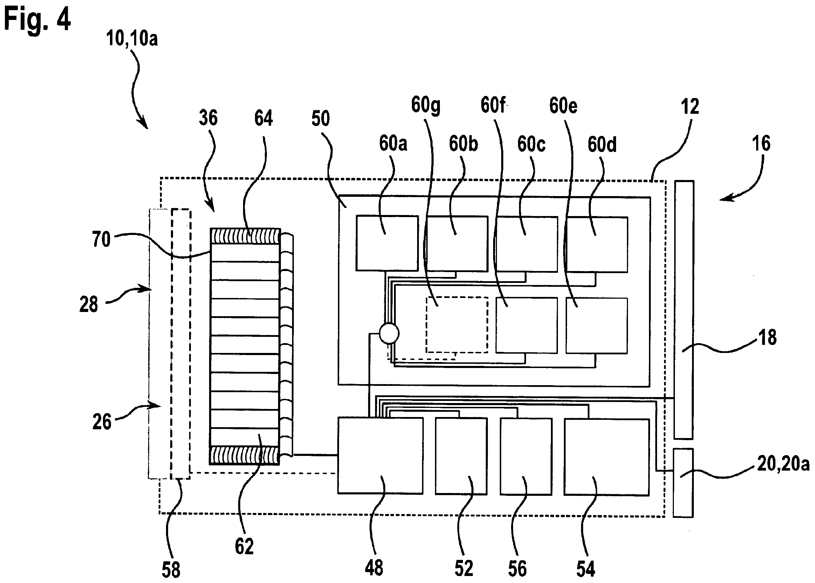

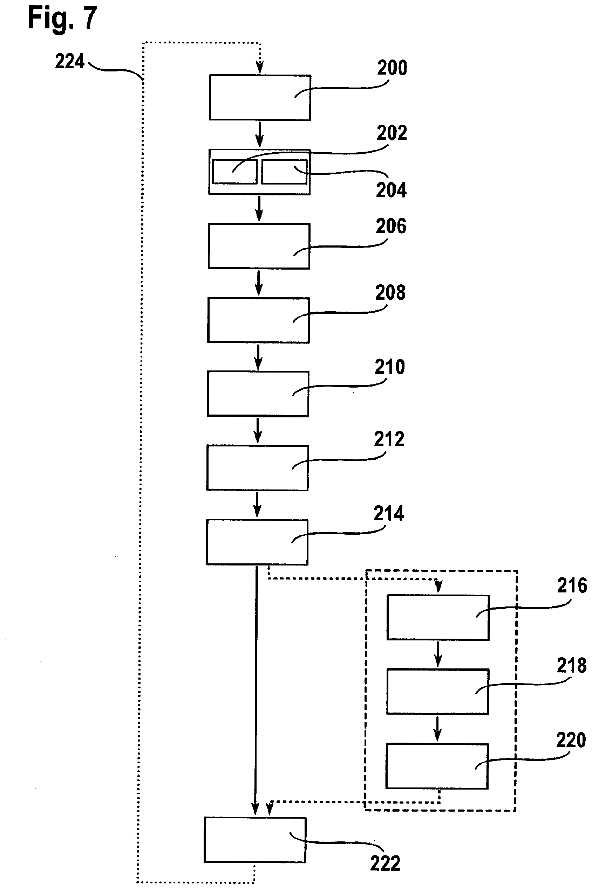

In Figur 4 sind die zur Ausführung des erfindungsgemäßen Verfahrens (vgl. insbesondere Figur 7) erforderlichen Komponenten der erfindungsmäßen Wärmebildkamera 10a schematisch dargestellt. Diese Komponenten sind innerhalb des Gehäuses 12 der Wärmebildkamera 10a als elektrische Bauteile untergebracht und miteinander verschaltet. Die Komponenten umfassen im Wesentlichen das Infrarot-Detektorarray 36, eine Steuervorrichtung 48, eine Auswertevorrichtung 50, eine Datenkommunikationsschnittstelle 52, eine Energieversorgungsvorrichtung 54 sowie einen Datenspeicher 56.

Die Steuervorrichtung 48 stellt insbesondere eine Vorrichtung dar, die zumindest eine Steuerelektronik sowie Mittel zur Kommunikation mit den anderen Komponenten der Wärmebildkamera 10a umfasst, insbesondere Mittel zur Steuerung und Regelung der Wärmebildkamera 10a. Die Steuervorrichtung 48 ist dazu vorgesehen, die Wärmebildkamera 10a zu steuern und deren Betrieb zu ermöglichen. Dazu ist die Steuervorrichtung 48 mit den anderen Komponenten des Messgeräts, insbesondere dem Infrarot-Detektorarray 36, der Auswertevorrichtung 50, der Datenkommunikationsschnittstelle 52, der Energieversorgungsvorrichtung 54, dem Datenspeicher 56, aber auch den Bedienelementen 20,20a und dem berührungssensitiven Display 18 signaltechnisch verbunden. In einem alternativen Ausführungsbeispiel der Wärmebildkamera 10a ist die Steuervorrichtung 48 auch mit einem Verschlussmechanismus 58 (hier gestrichelt dargestellt) verbunden.

Die Energieversorgungsvorrichtung 54 in Figur 4 wird bevorzugt durch den in Figur 1 und Figur 2 dargestellten Energiespeicher 44 realisiert.

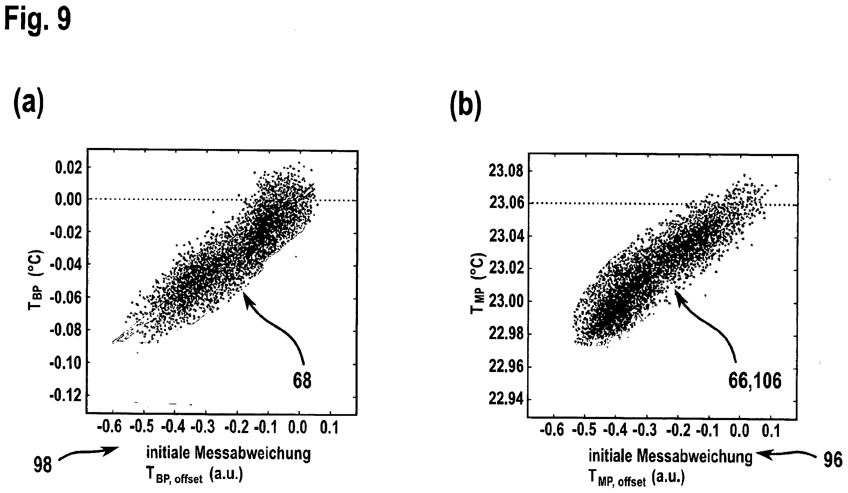

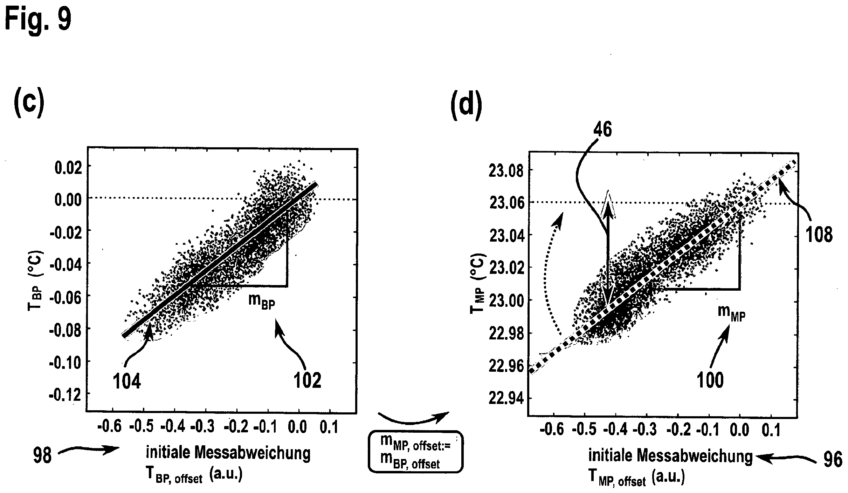

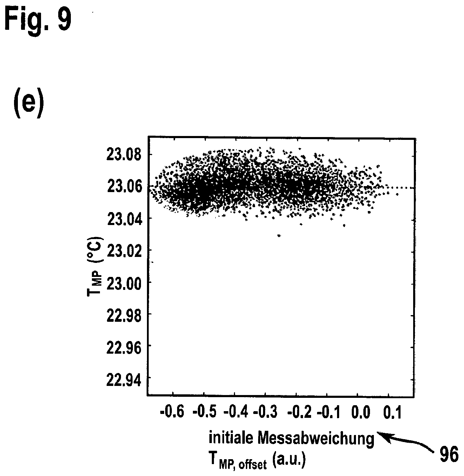

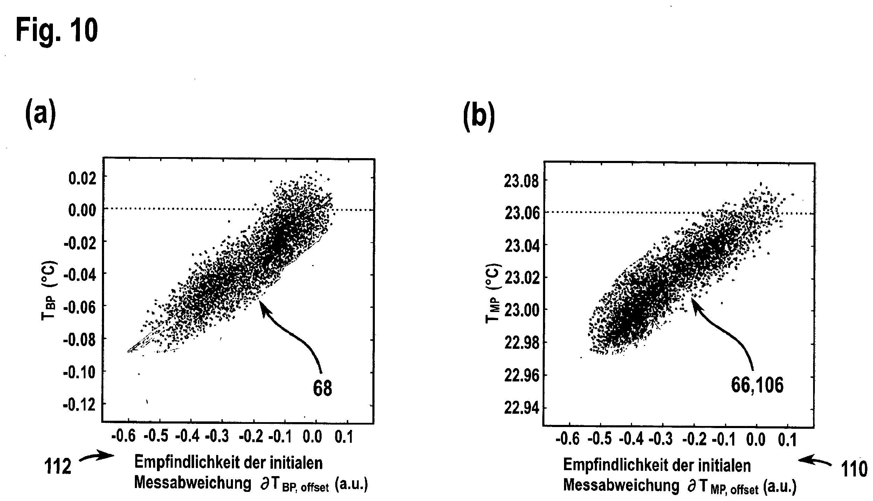

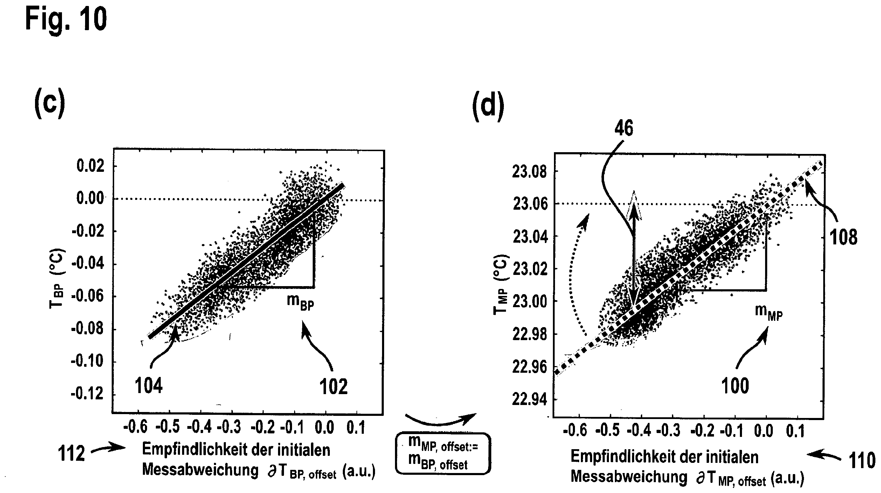

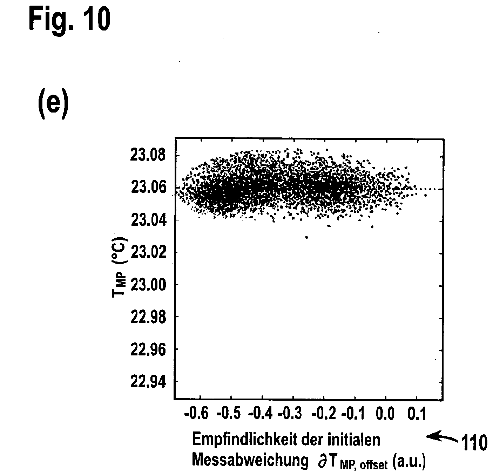

Die Auswertevorrichtung 50 dient zum Empfangen und Auswerten von Messsignalen des Infrarot-Detektorarrays 36 und weist eine Mehrzahl von Funktionsblöcken 60a-60g auf, die der Informationsverarbeitung, insbesondere der Auswertung der angenommenen Messsignale, dienen. Die Auswertevorrichtung 50 weist ferner einen Prozessor, einen Speicher und ein Betriebsprogramm mit Auswerte- und Berechnungsroutinen auf (jeweils nicht näher dargestellt). Die Auswertevorrichtung 50 ist dazu vorgesehen, von dem Infrarot-Detektorarray 36 bereitgestellte Messsignale, insbesondere von mit der Auswertevorrichtung 50 signaltechnisch verbindbaren Messpixeln 62 und Referenzpixeln 64 des Infrarot-Detektorarrays 36 bereitgestellte Messsignale, zu empfangen und auszuwerten (Funktionsblock 60a). Auf diese Weise werden Temperaturmesswerte $T_{MP}$ (Bezugszeichen 66, vgl. insbesondere Figuren 9 und 10) einer Mehrzahl von Messpixeln 62 sowie Temperaturmesswerte $T_{BP}$ (Bezugszeichen 68, vgl. insbesondere Figuren 9 und 10) einer Mehrzahl von Referenzpixeln 64 bestimmt.

Ferner ist die Auswertevorrichtung 50 dazu vorgesehen, Temperaturmesswerte $T_{MP}$ 66 um jeweils eine Pixel-zugehörige Temperatur-Driftkomponente $T_{drift}$ (Bezugszeichen 46, vgl. insbesondere Figuren 9 und 10) zu korrigieren. Diese Korrektur führt der Funktionsblock 60f durch. Die Auswertung der Pixel-zugehörigen Temperatur-Driftkomponente $T_{drift}$ 46 erfolgt durch die Funktionsblöcke 60b bis 60e. Die Verfahrensschritte, die durch die Funktionsblöcke 60a-60f erfüllt bzw. bearbeitet werden, werden im Detail im Zusammenhang mit den Figuren 7, 9 und 10 beschrieben.

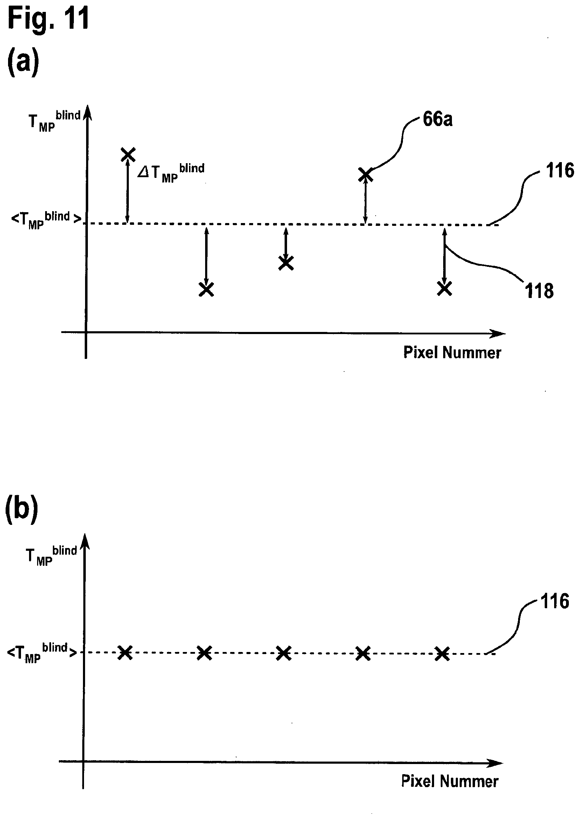

In dem bereits erwähnten alternativen Ausführungsbeispiel, in dem die Wärmebildkamera 10a einen Verschlussmechanismus 58 aufweist (in Figur 4 gestrichelt dargestellt), weist die Auswertevorrichtung 50 ferner einen Funktionsblock 60g (gestrichelt dargestellt) auf, der einer Homogenisierung bzw. einer Verringerung der Varianz der nach erfindungsgemäßem Verfahren bereits um die Temperatur-Driftkomponente $T_{drift}$ 46 korrigierten Temperaturmesswerte $T_{MP}$ 66 dient. Die Funktionsweise dieses Funktionsblocks 60g wird im Detail in der Erläuterung zu Figur 11 beschrieben.

Insgesamt ist die Wärmebildkamera 10a, insbesondere deren Auswertevorrichtung 50, dazu vorgesehen, basierend auf Messsignalen zumindest einer Mehrzahl von Messpixeln 62 und Referenzpixeln 64 eine Auswertung eines Wärmebilds 40 des Messbereichs 30 durchzuführen, wobei das Wärmebild 40 hinsichtlich einer Pixel-zugehörigen Temperatur-Driftkomponente $T_{drift}$ 46 korrigiert ist.

Die von der Auswertevorrichtung 50 ausgewerteten Temperaturmesswerte $T_{MP}$ 66 und $T_{BP}$ 68, die Pixel-zugehörigen Temperatur-Driftkomponenten $T_{drift}$ 46, die um die Pixel-zugehörigen Temperatur-Driftkomponenten $T_{drift}$ 46 korrigierten Temperaturmesswerte $T_{MP}^{corr}$ sowie aus diesen Daten zusammengesetzte Wärmebilder, insbesondere das auszugebene Wärmebild 40, werden von der Auswertevorrichtung 50 zur weiteren Verarbeitung der Steuervorrichtung 48 bereitgestellt. Derart kann eine Ausgabe an einen Benutzer der Wärmebildkamera 10a unter Verwendung des Displays 18 der Ausgabevorrichtung erfolgen. Alternativ oder zusätzlich kann die Ausgabe an ein externes Datengerät (nicht näher dargestellt) wie beispielsweise an ein Smartphone, an einen Computer oder dergleichen unter Verwendung der Datenkommunikationsschnittstelle 52 erfolgen. Die Datenkommunikationsschnittstelle 52 ist dabei in dem dargestellten Ausführungsbeispiel als eine WLAN- und/oder Bluetooth-Schnittstelle ausgeführt. Außerdem ist eine Ausgabe an den Datenspeicher 56 zur Abspeicherung der ermittelten Daten und Wärmebilder denkbar.

Das Infrarot-Detektorarray 36 der Wärmebildkamera 10a erfasst Wärmestrahlung aus dem infraroten Strahlungsspektrum, die in dem Messbereich 30 ausgehend von der zu untersuchenden Oberfläche 22 des Gegenstands 24 in die Eintrittsöffnung 28 der Wärmebildkamera 10a eintritt (vgl. Figur 3). Die in die Eintrittsöffnung 28 eintretende Wärmestrahlung wird mittels des Linsensystems 34 auf das Infrarot-Detektorarray 36 unter Beleuchtung zumindest einer Mehrzahl von Messpixeln 62 fokussiert (hier nicht näher dargestellt).

Figur 5a zeigt eine sehr stark vergrößerte, schematische Aufsicht auf einen Teil einer Ausführungsform des Infrarot-Detektorarrays 36 mit Messpixeln 62 und Referenzpixeln 64. Die Aufsicht entspricht der Wiedergabe eines Bildes, welches man mittels Rasterelektronenmikroskopie von der Oberfläche 70 des Infrarot-Detektorarrays 36 erhält. Das Infrarot-Detektorarray 36 besteht aus einem Halbleiter-Detektorarray-Substrat 72, das in diesem Ausführungsbeispiel aus Silizium realisiert ist. Weiße Flächen stellen dabei die Oberfläche 70 des Infrarot-Detektorarrays 36 dar, während die schwarzen Bereiche Vertiefungen, insbesondere geätzte Gräben 74 (vgl. insbesondere auch Figur 5b), in das Detektorarray-Substrat 72 hinein wiedergeben. Das Infrarot-Detektorarray 36 weist eine Mehrzahl von Messpixeln 62 und eine Mehrzahl von Referenzpixeln 64 auf.

Die Messpixel 62 und die Referenzpixel 64 sind jeweils auf der Oberfläche 70 des Infrarot-Detektorarrays 36 angeordnet, die gleichzeitig die Oberfläche 70 des Detektorarray-Substrats 72 bildet. Wie in dem schematischen Schnitt durch ein Messpixel 62 in Figur 5b dargestellt ist (Achtung: Schwarz gibt hier nicht die Vertiefungen wie in Figur 5a wider), weisen die Messpixel 62 - analog auch die hier nicht näher im Schnitt dargestellten Referenzpixel 64 - jeweils eine Ausnehmung 76 sowie eine aus einkristallinem Silizium gebildete Erfassungsstruktur 78 zur Erfassung von Infrarotstrahlung auf. Die Ausnehmung 76 bildet einen Hohlraum hinter der Erfassungsstruktur 78, d.h. die Ausnehmung 76 isoliert die Erfassungsstruktur 78 gegenüber dem Detektorarray-Substrat 72, sodass die Erfassungsstruktur 78 zu dem Detektorarray-Substrat 72 beabstandet angeordnet ist. Die Messpixel 62 und die Referenzpixel 64 weisen ferner Verbindungselemente 80,82 auf, über die sie mit dem Detektorarray-Substrat 72 verbunden sind und von diesem gehalten werden (Figur 5c). Somit sind die Messpixel 62 und die Referenzpixel 64 jeweils als isolierte, insbesondere unterätzte Erfassungsstrukturen 78 an der dem zu untersuchenden Gegenstand 24 zugewandten Oberfläche 70 des Infrarot-Detektorarrays 36 angeordnet. Jedes Messpixel 62 sowie jedes Referenzpixel 64 bildet eine prinzipiell infrarotlichtempfindliche P/N-Diode.

Die Messpixel 62 und die Referenzpixel 64 unterscheiden sich in ihrer Anbindung an das Detektorarray-Substrat 72. Während die Messpixel 62 unter Verwendung von wenigen ersten Verbindungselementen 80 an das Detektorarray-Substrat 72 angebunden sind, sind die Referenzpixel 64 unter Verwendung von vielen zweiten Verbindungselementen 82 an das Detektorarray-Substrat 72 angebunden. Wie in dem vergrößerten Ausschnitt eines Teils der Figur 5a in Figur 5c gezeigt ist, erfolgt die Anbindung der Messpixel 62 in diesem Ausführungsbeispiel durch zwei erste Verbindungselemente 80 von 100 $\mu$m Länge. Die Anbindung der Referenzpixel 64 erfolgt hingegen durch vierundzwanzig zweite Verbindungselemente 82 von 10 $\mu$m Länge. Es sei angemerkt, dass die zwei längeren Verbindungselemente nicht signifikant zur Wärmeleitfähigkeit beitragen, da diese im Wesentlichen durch die wesentlich kürzeren Verbindungselemente 82 bestimmt wird.

Somit ist die zweite effektive Querschnittsfläche $A_{BP}$ aller zweiten Verbindungselemente 82 - d.h. die Summe der einzelnen Querschnittsflächen (Bezugszeichen 126) der zweiten Verbindungselemente 82 - als das Zehnfache der ersten effektiven Querschnittsfläche $A_{MP}$ aller ersten Verbindungselemente 80 - d.h. die Summe der Querschnittsflächen (Bezugszeichen 124) der ersten Verbindungselemente 80 - realisiert (es wird eine gleiche Tiefe der Verbindungselemente 80 und 82 angenommen).

Ferner ist die erste effektive Länge $L_{MP}$ (Bezugszeichen 128) jedes der ersten Verbindungselemente 80 als das Zehnfache der zweiten effektiven Länge $L_{BP}$ (Bezugszeichen 130) jedes der zweiten Verbindungselemente 82 realisiert. Auf diese Weise ist realisiert, dass jedes Messpixel 62 mit einer ersten thermischen Wärmeleitfähigkeit $\lambda_{MP}$ 120 an das Detektorarray-Substrat 72 angebunden ist, während jedes Referenzpixel 64 mit einer zweiten thermischen Wärmeleitfähigkeit $\lambda_{BP}$ 122 an das Detektorarray-Substrat 72 angebunden ist. Die thermischen Wärmeleitfähigkeiten der entsprechenden Anbindungen sind in Figur 5d jeweils durch Pfeile (Bezugszeichen 120 und 122) gekennzeichnet. Insbesondere ist auf diese Weise realisiert, dass $A_{MP} / L_{MP}$ sehr viel kleiner ist als $A_{BP}/ L_{BP}$. Somit ist gemäß der Proportionalität (vgl. Erläuterungen zu Formel (1))

$$\lambda = \lambda_{spez.} \cdot A / L$$

in dem dargestellten Ausführungsbeispiel die erste thermische Wärmeleitfähigkeit $\lambda_{MP}$ 120 zumindest um einen Faktor 100 kleiner als die zweite thermische Wärmeleitfähigkeit $\lambda_{BP}$ 122.

Jedes Messpixel 62 hat aufgrund seiner mechanischen Verbindung über die Verbindungselemente 80 zum Detektorarray-Substrat 72 eine Fähigkeit zum Ableiten von mittels Infrarotstrahlung eingetragener Wärme. Die Wärme wird dabei an das Detektorarray-Substrat 72 abgeleitet. In Folge der Einstrahlung von Infrarotstrahlung $P_{MP}$ erwärmt sich ein jeweiliges Messpixel 62 um $\Delta T_{MP}$, wobei sich auf Grund der Erwärmung ein elektrischer Widerstand des Messpixels 62 gegenüber einem durch das Messpixel 62 fließenden Strom $I_{MP}$ ändert. Die erste thermische Wärmeleitfähigkeit $\lambda_{MP}$ 120, mit der die Messpixel 62 an das Detektorarray-Substrat 72 angebunden sind, ist dabei derart gewählt, dass die Messpixel 62 eine hohe Empfindlichkeit für eingestrahlte Infrarotstrahlung aufweisen. Jedes Messpixel 62 erzeugt basierend auf einer detektierten Infrarotstrahlung, bevorzugt in Abhängigkeit einer detektierten Intensität eingestrahlter Infrarotstrahlung, ein elektrisches Messsignal $I_{MP}$, das mit der eingestrahlten Wärmeleistung der Infrarotstrahlung $P_{MP}$ auf das Messpixel 62 korreliert. Der Strom $I_{MP}$ stellt in diesem Ausführungsbeispiel das Messsignal eines jeden Messpixels 62 dar, wobei die Messsignale aller Messpixel 62 unabhängig voneinander der Steuervorrichtung 48 bereitgestellt werden. Alternativ könnte auch eine Spannung $U_{MP}$ als Messsignal verwendet werden. Jedes von einem Messpixel 62 bereitgestellte Messsignal kann zur Ermittlung des jeweiligen Temperaturmesswerts $T_{MP}$ 66 durch die Steuervorrichtung 48 an die Auswertevorrichtung 50 des Infrarot-Messsystems 10a weitergeleitet werden, von der es einzeln oder in Kombination mit anderen Messsignalen anderer Messpixel 62 ausgewertet wird.

Da die Referenzpixel 64 mit der zweiten thermischen Wärmeleitfähigkeit $\lambda_{BP}$ 122 an das Detektorarray-Substrat 72 angebunden sind, die in diesem Ausführungsbeispiel hundertfach größer ist als die erste thermische Wärmeleitfähigkeit $\lambda_{MP}$ 120, sind die Referenzpixeln 64 - verglichen mit den Messpixeln 62 - für aus dem Messbereich 30 einfallende Infrarotstrahlung im Wesentlichen unempfindlich. Somit können die Referenzpixel 64 als "Blindpixel" betrachtet werden. Ein von einem jeweiligen Referenzpixel 64 an das Detektorarray-Substrat 72 abfließender Wärmestrom ist also auf Grund der thermischen Anbindung des Referenzpixels 64 deutlich größer als ein von einem Messpixel 62 an das Detektorarray-Substrat 72 abfließender Wärmestrom. Analog wie beim Messpixel 62 kann der Referenzpixelstrom $I_{BP}$ (alternativ die Spannung $U_{BP}$) eines jeden Referenzpixels 64 als Messsignal der Steuervorrichtung 48 bereitgestellt werden und von dieser zur Ermittlung eines Temperaturmesswerts $T_{BP}$ 68 an die Auswertevorrichtung 50 des Infrarot-Messsystems 10a weitergeleitet werden, von der es - analog wie die Messsignale der Messpixel 62 - ausgewertet wird.

In Figur 5d ist ein elektrisches Ersatzschaltbild für das in Figur 5a dargestellte Infrarot-Detektorarray 36 wiedergegeben, in dem Widerstände 84,86 unterschiedlicher Dimension - symbolisiert durch unterschiedliche Größen der Widerstände - die Wärmeleitfähigkeiten $\lambda_{MP}$ bzw. $\lambda_{BP}$ repräsentieren, mit der die Messpixel 62 bzw. die Referenzpixel 64 an das Detektorarray-Substrat 72 angebunden sind. Die kleinen Widerstände 86 (fünf Stück) symbolisieren dabei die große Wärmeleitfähigkeit $\lambda_{BP}$ 122 der Referenzpixel 64 (d.h. geringer Wärmeleitwiderstand), während die großen Widerstände 84 (vier Stück) die kleine Wärmeleitfähigkeit $\lambda_{MP}$ 120 (d.h. großer Wärmeleitwiderstand) der Messpixel 62 symbolisieren.

Figur 6a zeigt eine schematische Aufsicht auf eine Ausführungsform des Infrarot-Detektorarrays 36 der erfindungsgemäßen Wärmebildkamera 10a aus Blickrichtung der einfallenden Messstrahlung. Jedes Messpixel 62 und jedes Referenzpixel 64 ist hier vereinfacht als ein Quadrat repräsentiert. Beispielhaft ist die Mehrzahl von Messpixeln 62 Matrix-artig in Form eines Arrays 88 an der Oberfläche 70 des Infrarot-Detektorarrays 36, insbesondere an der Oberfläche 70 des Detektorarray-Substrats 72, angeordnet. Die Anzahl der Messpixel 62 beträgt in diesem Ausführungsbeispiel beispielhaft 41x32. Beliebige andere Werte sind denkbar.

Die Anordnung der Referenzpixel 64 auf dem Detektorarray-Substrat 72 ist prinzipiell beliebig, kann aber zur Realisierung einer über das gesamte Infrarot-Detektorarray 36 gleichmäßiger bestimmbaren Temperatur-Driftkomponente $T_{drift}$ 46 vorteilhaft verteilt sein. In Figur 6b sind unterschiedliche Muster dargestellt, die beispielhafte Anordnungen von Messpixeln 62 und Referenzpixeln 64 auf dem Infrarot-Detektorarray 36 repräsentieren. Wie auch in Figur 6a gezeigt, kann das Array 88 von Messpixeln 62 beispielsweise durch eine Anordnung 90 von Referenzpixel 64 umgeben sein, insbesondere eingerahmt sein, vgl. Figur 6b oben links. In einem weiteren Ausführungsbeispiel können die Referenzpixel 64 in dem Array 88 von Messpixeln 62 regelmäßig angeordnet (vgl. Figur 6b, Muster oben rechts, unten links, unten rechts), bevorzugt symmetrisch angeordnet, besonders bevorzugt symmetrisch zu zumindest einer Hauptsymmetrieachse 92 des Infrarot-Detektorarrays angeordnet sein (vgl. Figur 6b, Muster unten rechts).

Im Folgenden wird das erfindungsgemäße Verfahren anhand der Figuren 7 bis 11 erklärt.

In Figur 7 ist ein Verfahrensdiagramm dargestellt, das eine Ausführungsform des erfindungsgemäßen Verfahrens zur kontaktfreien Ermittlung der Temperatur der Oberfläche 22, insbesondere zur kontaktfreien Ermittlung eines Wärmebilds 40 der Oberfläche 22, wiedergibt. Das Verfahren ist dazu vorgesehen, von einer Wärmebildkamera 10a betrieben zu werden, wie sie im Zusammenhang mit den Figuren 1 bis 6 vorgestellt wurde.

Ausgehend von dem in Figur 3 dargestellten Messszenario ist ein Benutzer der Wärmebildkamera 10a an einer Untersuchung der Temperaturverteilung der Oberfläche 22 eines Gegenstands 24 interessiert. Der Benutzer richtet zur Vermessung der Oberfläche 22 die Wärmebildkamera 10a auf den zu untersuchenden Gegenstand 24. Währenddessen erfasst die Wärmebildkamera 10a mit dem Infrarot-Detektorarray 36 kontinuierlich Infrarotstrahlung aus dem Messbereich 30 und zeigt währenddessen kontinuierlich ein unkorrigiertes Wärmebild auf dem Display 18 an. In einem ersten Verfahrensschritt 200 betätigt der Benutzer den Trigger 20a der Wärmebildkamera 10a und initiiert dadurch die Bestimmung der Temperatur-Driftkomponenten $T_{drift}$ 46 sowie die Korrektur der ermittelten Temperaturmesswerte $T_{MP}$ 66 der Messpixel 62. In einem alternativen Ausführungsbeispiel des Verfahrens kann diese Initiierung auch automatisiert, insbesondere in zeitlichen Abständen wiederholt oder quasi-kontinuierlich, erfolgen (vgl. gestrichelter Pfeil 224 in Figur 7).

Anschließend leitet die Steuervorrichtung 48 die zu dem Zeitpunkt der Initiierung von dem Infrarot-Detektorarray 36 bereitgestellten Messsignale an die Auswertevorrichtung 50 weiter. In Verfahrensschritt 202 bestimmt die Auswertevorrichtung 50 die Temperaturmesswerte $T_{BP}$ 68 einer Mehrzahl von Referenzpixeln 64 aus deren Messsignalen. Zeitgleich (alternativ auch hintereinander) bestimmt die Auswertevorrichtung 50 in Verfahrensschritt 204 die Temperaturmesswerte $T_{MP}$ 66 einer Mehrzahl von Messpixeln 62 aus deren Messsignalen. Diese Temperaturmesswerte $T_{MP}$ sind die in diesem Ausführungsbeispiel nach erfindungsgemäßem Verfahren zu korrigierenden Temperaturmesswerte. Die Bestimmung der Temperaturmesswerte aus den Messsignalen erfolgt in dem Funktionsblock 60a der Auswertevorrichtung 50, vgl. Figur 4. Dabei wandelt der Funktionsblock 60a die jeweiligen Messsignale $I_{MP}$ und $I_{BP}$ in Temperaturmesswerte $T_{MP}$ 66 bzw. $T_{BP}$ 68 um.

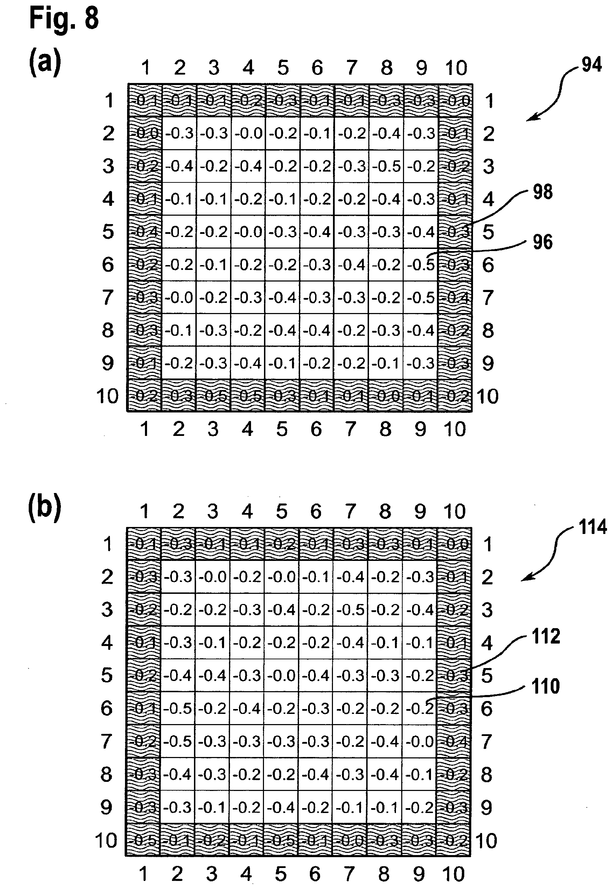

Anschließend lädt die Auswertevorrichtung 50 aus dem Datenspeicher 56 eine "initiale Offset-Karte" 94, wie sie in Figur 8a dargestellt ist. Mittels der initialen Offset-Karte 94 ordnet die Auswertevorrichtung 50 in Verfahrensschritt 206 den Temperaturmesswerten $T_{BP}$ 68 der Mehrzahl von Referenzpixeln 64 (in Figur 8a schraffiert) eindeutige initiale Messabweichungen $T_{BP,offset}$ 98 zu. In Figur 8a ist die eindeutige Identifikation der Pixel beispielhaft jeweils über deren Zeilen- und Spaltennummer gewährleistet. Dabei bildet die Auswertevorrichtung 50 durch das Auslesen von zu den jeweiligen Referenzpixeln 64 zugeordneten initialen Messabweichungen $T_{BP,offset}$ 98 aus der initiale Offset-Karte 94 Wertepaare ($T_{BP}$, $T_{BP,offset}$) für jedes auszuwertende Referenzpixel 64. Diese Wertepaare lassen sich anschaulich unter Auftragung der ermittelten Temperaturmesswerte $T_{BP}$ 68 auf der Ordinatenachse gegen die initialen Messabweichungen $T_{BP,offset}$ 98 auf der Abszissenachse darstellen, vgl. Figur 9a. Verfahrensschritt 206 wird in dem Funktionsblock 60b der Auswertevorrichtung 50, vgl. Figur 4, durchgeführt.

Anschließend berechnet die Auswertevorrichtung 50 in Verfahrensschritt 208 das Temperatur-Driftverhalten $m_{BP}$ 102 der Referenzpixel 64 aus den Temperaturmesswerten $T_{BP}$ 68 der Referenzpixel 64 als Geradensteigung einer Gerade 104, vgl. Figur 9c, die die aufgetragenen Wertepaare besonders gut modelliert. Diese Gerade kann in einer Ausführungsform des Verfahrens beispielsweise per Least-Square-Fit oder dergleichen erhalten werden. Insbesondere gilt für diese Gerade 104 die allgemeine Gleichung

$$T_{BP} = m_{BP} \cdot (T_{BP,offset}^{0} - T_{BP,offset})$$

mit dem Abszissenachsenabschnitt $T_{BP,offset}^{0}$ und dem Temperatur-Driftverhalten $m_{BP}$ 102 der Referenzpixel 64 als Proportionalitätskonstante. Die Bestimmung des Temperatur-Driftverhaltens $m_{BP}$ 102 der Referenzpixel 64 erfolgt in dem Funktionsblock 60c der Auswertevorrichtung 50, vgl. Figur 4.

In Verfahrensschritt 210 setzt die Auswertevorrichtung 50 zur Bestimmung der Temperatur-Driftkomponenten $T_{drift}$ 46 das Temperatur-Driftverhalten $m_{MP}$ 100 von Messpixeln 62 in einen mathematischen Zusammenhang mit dem Temperatur-Driftverhalten $m_{BP}$ 102 der Referenzpixel 64. In dem in Figur 9 veranschaulichten Ausführungsbeispiel des Verfahrens wird das Temperatur-Driftverhalten $m_{MP}$ 100 der Messpixel 62 gleich dem Temperatur-Driftverhalten $m_{BP}$ 102 der Referenzpixel 64 gesetzt, d.h. $m_{MP} := m_{BP}$. Die Durchführung des Verfahrensschritts 210 erfolgt in dem Funktionsblock 60d der Auswertevorrichtung 50, vgl. Figur 4.

In Verfahrensschritt 212 bestimmt die Auswertevorrichtung 50 die Pixel-abhängige Temperatur-Driftkomponenten $T_{drift}$ 46 aus dem Temperatur-Driftverhalten $m_{MP}$ 100 der Messpixel 62. Dazu bestimmt die Auswertevorrichtung 50 zunächst zu jedem auszuwertenden Messpixel 62 - das sind in diesem Ausführungsbeispiel diejenigen Messpixel, für die die Temperaturmesswerte $T_{MP}$ in Verfahrensschritt 204 bestimmt wurden - die zugehörigen initialen Messabweichungen $T_{MP,offset}$ 96 aus der im Zusammenhang mit Verfahrensschritt 206 geladenen initialen Offset-Karte 94 (vgl. Figur 8a, Messpixel dort weiß dargestellt). Die über die initialen Messabweichungen $T_{MP,offset}$ 96 (Abszisse) aufgetragenen Temperaturmesswerte $T_{MP}$ 66 (Ordinate) einer Mehrzahl von Messpixeln 62 sind in der Figur 9b als eine Punktewolke 106 dargestellt. Daraufhin kann eine zu einem Messpixel 62 gehörende Temperatur-Driftkomponente $T_{drift}$ 46 als Produkt aus dem Temperatur-Driftverhalten $m_{MP}$ 100 und der zu dem entsprechenden Messpixel 62 gehörenden initialen Messabweichung $T_{MP,offset}$ 96 gemäß der Formel

$$T_{drift} = m_{MP} \cdot (T_{MP,offset}^{0} - T_{MP,offset})$$

berechnet werden. Dies ist in der Figur 9d als die gestrichelte, berechnete Gerade 108 dargestellt, auf der die von der initialen Messabweichung $T_{MP,offset}$ 96 (Abszissenachse) abhängigen Werte für die Temperatur-Driftkomponente $T_{drift}$ 46 liegen. Die Bestimmung des Pixel-abhängigen Temperatur-Driftverhaltens $T_{drift}$ 46 gemäß Verfahrensschritt 212 erfolgt in dem Funktionsblock 60e der Auswertevorrichtung 50, vgl. Figur 4.

Somit bestimmt die Auswertevorrichtung 50 in den Verfahrensschritten 206 bis 212 die Temperatur-Driftkomponenten $T_{drift}$ 46 aus den Temperaturmesswerten $T_{BP}$ 68 der Referenzpixel 64 unter Verwendung der Funktionsblöcke 60a bis 60e der Auswertevorrichtung 50.

In Verfahrensschritt 214 erfolgt die abschließende Korrektur der Temperaturmesswerte $T_{MP}$ 66 der Messpixel 62 um die für das jeweilige Messpixel 62 bestimmte Temperatur-Driftkomponente $T_{drift}$ 46 durch Subtraktion beider Werte. Gemäß der Darstellung in Figuren 9d und 9e wird von den Werten der Punktewolke die Gerade 108 subtrahiert, sodass diese Korrektur durch die Drehung der Punktewolke, die die Temperaturmesswerte $T_{MP}$ 66 der Messpixel 64 repräsentiert, veranschaulicht werden kann (linker Pfeil in Figur 9d). Die Durchführung von Verfahrensschritt 214 erfolgt in Funktionsblock 60f der Auswertevorrichtung 50, vgl. Figur 4.

In einer alternativen oder zusätzlichen Ausführungsform des Verfahrens kann an Stelle der initialen Messabweichungen $T_{MP,offset}$ 96 und der initialen Messabweichung $T_{BP,offset}$ 98 auch die "Empfindlichkeit der initialen Messabweichungen $\partial T_{MP,offset}$ gegenüber Alterungseinflüssen" 110 der Messpixel 62 bzw. die "Empfindlichkeit der initialen Messabweichungen $\partial T_{BP,offset}$ gegenüber Alterungseinflüssen" 112 der Referenzpixel 64 verwendet werden. Äquivalent zu den Darstellungen in Figur 9 und in Figur 7 erfolgt dann die Auswertung derart, dass zur Bestimmung der Temperatur-Driftkomponenten $T_{drift}$ 46 das Temperatur-Driftverhalten $m_{BP}$ 102 der Referenzpixel 64 als Proportionalitätskonstante zwischen Empfindlichkeiten der initialen Messabweichungen $\partial T_{BP,offset}$ 112 der Referenzpixel 64 und Temperaturmesswerten $T_{BP}$ 68 bestimmt wird (vgl. Äquivalenz von Figur 9 und Figur 10 bis auf Abszissen-Achsenbeschriftungen). Ferner werden, äquivalent zu Figur 9d, die Temperatur-Driftkomponenten $T_{drift}$ 46 aus dem Temperatur-Driftverhalten $m_{MP}$ 100 bestimmt, indem die Temperatur-Driftkomponenten $T_{drift}$ 46 der jeweiligen Messpixel 62 in Form einer Funktion als Produkt von Temperatur-Driftverhalten $m_{MP}$ 100 und Empfindlichkeiten der initialen Messabweichungen $\partial T_{MP,offset}$ 110 der jeweiligen Messpixel 62 berechnet werden (vgl. Äquivalenz von Figur 9d und Figur 10d bis auf Abszissen-Achsenbeschriftungen). Insbesondere wird in diesem Ausführungsbeispiel des erfindungsgemäßen Verfahrens auf eine in dem Datenspeicher 56 bereitgehaltene "initiale Driftanfälligkeit-Karte" 114 zurückgegriffen (vgl. Figur 8b). Äquivalent zu dem bereits beschriebenen Verfahren ordnet die Auswertevorrichtung 50 dann in einem dem Verfahrensschritt 206 äquivalenten Verfahrensschritt den Temperaturmesswerten $T_{BP}$ 68 der Mehrzahl von Referenzpixeln 64 (in Figur 8b schraffiert dargestellt) unter Verwendung der initialen Driftanfälligkeit-Karte 114 eindeutige Empfindlichkeiten der initialen Messabweichungen $\partial T_{BP,offset}$ 112 zu.

In dem bereits erwähnten alternativen Ausführungsbeispiel, in dem die Wärmebildkamera 10a einen Verschlussmechanismus 58 aufweist (in Figur 4 gestrichelt dargestellt), können die Temperaturmesswerte $T_{MP}$ 66 homogenisiert werden. In dem in Figur 7 gezeigten Ausführungsbeispiel des erfindungsgemäßen Verfahrens kann diese Homogenisierung im Anschluss an die Korrektur der Temperaturmesswerte $T_{MP}$ 66 der Messpixel 62 um die Temperatur-Driftkomponente $T_{dift}$ 46 erfolgen, d.h. nach Verfahrensschritt 214. Alternativ oder zusätzlich kann die Homogenisierung auch zu einem beliebigen anderen Zeitpunkt erfolgen, beispielsweise vor der Berechnung der Temperatur-Driftkomponente $T_{drift}$ 46, d.h. vor Verfahrensschritt 206.

In Verfahrensschritt 216 wird nun zunächst der Einfall von Infrarotstrahlung auf das Infrarot-Detektorarray 36 mittels des Verschlussmechanismus 58 unterbunden und die Temperaturmesswerte $T_{MP}^{blind}$ 66a ausgelesen. In Figur 11a sind beispielhaft fünf Temperaturmesswerte $T_{MP}^{blind}$ 66a in einem Diagramm aufgetragen. Anschließend wird in Verfahrensschritt 218 aus diesen Temperaturmesswerten $T_{MP}^{blind}$ 66a ein Mittelwert $<T_{MP}^{blind}>$ 116 berechnet, der der Temperatur des Verschlussmechanismus 58 sehr nahekommt. Die tatsächliche Temperatur des Verschlussmechanismus 58 ist dabei unerheblich. Der Mittelwert $<T_{MP}^{blind}>$ 116 ist in Figur 11a als eine gestrichelte Linie dargestellt. Die Berechnung einer Pixel-abhängigen Abweichung $\Delta T_{MP}^{blind}$ 118 von dem Mittelwert $<T_{MP}^{blind}>$ 116 (kleine Pfeile in Figur 11a) für die ausgelesenen Messpixel 62 erlaubt nun, jedes Messpixel 62 um genau diese Abweichung $\Delta T_{MP}^{blind}$ 118 in Verfahrensschritt 220 zu korrigieren, indem die Korrekturwerte $\Delta T_{MP}^{blind}$ 118 auf die Temperaturmesswerte $T_{MP}$ 66 angewandt werden und somit die Temperaturmesswerte $T_{MP}$ 66 homogenisiert bzw. auf den Mittelwert $<T_{MP}^{blind}>$ 116 angeglichen werden. Letzteres ist in Figur 11b dargestellt, in der die Temperaturmesswerte $T_{MP}^{blind}$ 66a nach erfolgter Homogenisierung auf der den Mittelwert $<T_{MP}^{blind}>$ 116 darstellenden gestrichelten Linie liegen.

Die Durchführung der Verfahrensschritte 216 bis 220 erfolgt in Funktionsblock 60g der Auswertevorrichtung 50, vgl. Figur 4.

Abschließend wird in Verfahrensschritt 222 das korrigierte und eventuell homogenisierte Wärmebild 40 unter Verwendung des Displays 18 an den Benutzer der Wärmebildkamera 10a ausgegeben.

## Patentansprüche

1. Verfahren zur kontaktfreien Ermittlung einer Temperatur einer Oberfläche (22), insbesondere zur kontaktfreien Ermittlung einer Temperaturverteilung einer Oberfläche (22), mittels eines Infrarot-Messsystems (10), wobei das Infrarot-Messsystem (10) zumindest aufweist:

   ein Infrarot-Detektorarray (36) mit einem Detektorarray-Substrat (72) und

   • mit einer Mehrzahl von Messpixeln (62), die jeweils mit einer ersten thermischen Wärmeleitfähigkeit $\lambda_{MP}$ (120) an das Detektorarray-Substrat (72) angebunden sind, wobei die Messpixel (62) für Infrarotstrahlung empfindlich sind und jeweils ein Messsignal zur Ermittlung eines von einer Intensität der einfallenden Infrarotstrahlung abhängigen Temperaturmesswerts $T_{MP}$ (66) bereitstellen, und

• mit einer Mehrzahl von Referenzpixeln (64), die jeweils mit einer zweiten thermischen Wärmeleitfähigkeit $\lambda_{BP}$ (122) an das Detektorarray-Substrat (72) angebunden sind, und die jeweils ein Messsignal zur Ermittlung eines Temperaturmesswerts $T_{BP}$ (68) bereitstellen,

wobei das Verfahren zumindest folgende Schritte umfasst:

• Bestimmen der Temperaturmesswerte $T_{BP}$ (68) einer Mehrzahl von Referenzpixeln (64);
• Bestimmen der Temperaturmesswerte $T_{MP}$ (66) einer Mehrzahl von Messpixeln (62);
• Korrigieren von Temperaturmesswerten $TMP$ (66) um jeweils eine Pixel-zugehörige Temperatur-Driftkomponente $T_{drift}$ (46),

wobei die Referenzpixel (64) als für Infrarotstrahlung im Wesentlichen unempfindliche Blindpixel realisiert sind, wobei die zweite thermische Wärmeleitfähigkeit $\lambda_{BP}$ (122) größer ist als die erste thermische Wärmeleitfähigkeit $\lambda_{MP}$ (120), **dadurch gekennzeichnet, dass** die Temperatur-Driftkomponenten $T_{drift}$ (46), um die sich die Temperaturmesswerte $T_{MP}$ zeitabhängig verschieben, unter Verwendung von Temperaturmesswerten $T_{BP}$ (68) bestimmt werden, wobei zur Bestimmung der Temperatur-Driftkomponenten $T_{drift}$ (46) ein Temperatur-Driftverhalten $m_{BP}$ (102) der Referenzpixel (64) aus Temperaturmesswerten $T_{BP}$ (68) der Referenzpixel (64) bestimmt wird.

2. Verfahren nach Anspruch 1, **dadurch gekennzeichnet, dass** die Temperatur-Driftkomponenten $T_{drift}$ (46) in zeitlichen Abständen wiederholt, insbesondere regelmäßig, bevorzugt kontinuierlich oder quasi-kontinuierlich, bestimmt werden.

3. Verfahren nach einem der vorhergehenden Ansprüche, **dadurch gekennzeichnet, dass** zur Bestimmung der Temperatur-Driftkomponenten $T_{drift}$ (46) das Temperatur-Driftverhalten $m_{BP}$ (102) der Referenzpixel (64) als Proportionalitätskonstante zwischen initialen Messabweichungen $T_{BP,offset}$ (98) der Referenzpixel (64) und Temperaturmesswerten $T_{BP}$ (68) der Referenzpixel (64) bestimmt wird.

4. Verfahren nach einem der vorhergehenden Ansprüche, **dadurch gekennzeichnet, dass** zur Bestimmung der Temperatur-Driftkomponenten $T_{drift}$ (46) das Temperatur-Driftverhalten $m_{BP}$ (102) der Referenzpixel (64) als Proportionalitätskonstante zwischen Empfindlichkeiten der initialen Messabweichungen $\partial T_{BP,offset}$ gegenüber Alterungseinflüssen (112) der Referenzpixel (64) und Temperaturmesswerten $T_{BP}$ (68) der Referenzpixel (64) bestimmt wird.

5. Verfahren nach einem der vorhergehenden Ansprüche, **dadurch gekennzeichnet, dass** zur Bestimmung der Temperatur-Driftkomponenten $T_{drift}$ (46) ein Temperatur-Driftverhalten $m_{MP}$ (100) von Messpixeln (62) in einen mathematischen Zusammenhang mit einem Temperatur-Driftverhalten $m_{BP}$ (102) von Referenzpixeln (64) gesetzt wird und aus dem mathematischen Zusammenhang das Temperatur-Driftverhalten $m_{MP}$ (100) von Messpixeln (62) bestimmt wird.

6. Verfahren nach Anspruch 5, **dadurch gekennzeichnet, dass** das Temperatur-Driftverhalten $m_{MP}$ (100) der Messpixel (62) gleich dem Temperatur-Driftverhalten $m_{BP}$ (102) der Referenzpixel (64) gesetzt wird.

7. Verfahren nach einem der Ansprüche 5 oder 6, **dadurch gekennzeichnet, dass** die Temperatur-Driftkomponenten $T_{drift}$ (46) aus dem Temperatur-Driftverhalten $m_{MP}$ (100) von Messpixeln (62) bestimmt werden.

8. Verfahren nach Anspruch 7, **dadurch gekennzeichnet, dass** die Temperatur-Driftkomponenten $T_{drift}$ (46) aus dem Temperatur-Driftverhalten $m_{MP}$ (100) bestimmt werden, indem die Temperatur-Driftkomponenten $T_{drift}$ (46) der jeweiligen Messpixel (62) in Form einer Funktion als Produkt von Temperatur-Driftverhalten $m_{MP}$ (100) und initialen Messabweichungen $T_{MP,offset}$ (96) der jeweiligen Messpixel (62) berechnet werden.

9. Verfahren nach Anspruch 7, **dadurch gekennzeichnet, dass** die Temperatur-Driftkomponenten $T_{drift}$ (46) aus dem Temperatur-Driftverhalten $m_{MP}$ (100) bestimmt werden, indem die Temperatur-Driftkomponenten $T_{drift}$ (46) der jeweiligen Messpixel (62) in Form einer Funktion als Produkt von Temperatur-Driftverhalten $m_{MP}$ (100) und Empfindlichkeiten der initialen Messabweichungen $\partial T_{BP,offset}$ gegenüber Alterungseinflüssen (110) der jeweiligen Messpixel (62) berechnet werden.

**10.** Verfahren nach einem der vorhergehenden Ansprüche, **dadurch gekennzeichnet, dass** in einem weiteren Verfahrensschritt ein Einfall von Infrarotstrahlung auf das Infrarot-Detektorarray (36) mittels eines Verschlussmechanismus (58) des Infrarot-Messsystems (10) unterbunden wird und die Temperaturmesswerte $T_{MP}$ (66) jeweils um eine Pixel-abhängige Abweichung $\Delta T_{MP}^{blind}$ (118) von einem Mittelwert $<T_{MP}^{blind}>$ (116) aller bei unterbundenem Einfall von Infrarotstrahlung gemessenen Temperaturmesswerten $T_{MP}^{blind}$ (66a) korrigiert werden.

**11.** Infrarot-Messsystem (10), insbesondere handgehaltene Wärmebildkamera (10a), zur kontaktfreien Ermittlung einer Temperaturverteilung einer Oberfläche (22), **gekennzeichnet durch** eine Auswertevorrichtung (50), die dazu eingerichtet ist, das Verfahren nach einem der vorhergehenden Ansprüche durchzuführen, sowie aufweisend zumindest ein Infrarot-Detektorarray (36) mit einem Detektorarray-Substrat (72)

• mit einer Mehrzahl von Messpixeln (62), die jeweils mit einer ersten thermischen Wärmeleitfähigkeit $\lambda_{MP}$ (120) an das Detektorarray-Substrat (72) angebunden sind, wobei die Messpixel (62) für Infrarotstrahlung empfindlich sind und jeweils ein Messsignal zur Ermittlung eines von einer Intensität der einfallenden Infrarotstrahlung abhängigen Temperaturmesswerts $T_{MP}$ (66) bereitstellen,
• mit einer Mehrzahl von Referenzpixeln (64), die jeweils mit einer zweiten thermischen Wärmeleitfähigkeit $\lambda_{BP}$ (122) an das Detektorarray-Substrat (72) angebunden sind, und die jeweils ein Messsignal zur Ermittlung eines Temperaturmesswerts $T_{BP}$ (68) bereitstellen,

wobei die Referenzpixel (64) als für Infrarotstrahlung im Wesentlichen unempfindliche Blindpixel realisiert sind, wobei die zweite thermische Wärmeleitfähigkeit $\lambda_{BP}$ (122) größer ist als die erste thermische Wärmeleitfähigkeit $\lambda_{MP}$ (120).

**12.** Infrarot-Messsystem (10) nach Anspruch 11, **dadurch gekennzeichnet, dass** eine Anordnung (90) von Referenzpixeln (64) auf dem Infrarot-Detektorarray (36) ein auf dem Infrarot-Detektorarray (36) angeordnetes Array (88) von Messpixeln (62) umgibt, insbesondere einrahmt.

**13.** Infrarot-Messsystem (10) nach einem der Ansprüche 11-12, **dadurch gekennzeichnet, dass** die Referenzpixel (64) in einem auf dem Infrarot-Detektorarray (36) angeordneten Array (88) von Messpixeln (62) angeordnet sind, insbesondere regelmäßig angeordnet sind, bevorzugt symmetrisch angeordnet sind, besonders bevorzugt symmetrisch zu zumindest einer Hauptsymmetrieachse (92) des Infrarot-Detektorarrays (36) angeordnet sind.

**14.** Infrarot-Messsystem (10) nach einem der Ansprüche 11-13, **dadurch gekennzeichnet, dass** die erste thermische Wärmeleitfähigkeit $\lambda_{MP}$ (120) um einen Faktor 10, bevorzugt um einen Faktor 100, besonders bevorzugt um einen Faktor 1000 oder mehr, kleiner ist als die zweite thermische Wärmeleitfähigkeit $\lambda_{BP}$ (122).

**15.** Infrarot-Messsystem (10) nach einem der Ansprüche 11-14, **dadurch gekennzeichnet, dass** die erste thermische Wärmeleitfähigkeit $\lambda_{MP}$ (120) durch eine erste effektive Querschnittsfläche $A_{MP}$ und eine erste effektive Länge $L_{MP}$ (128) von ersten Verbindungselementen (80) realisiert ist, über die die Messpixel (62) mit dem Detektorarray-Substrat (72) verbunden sind, und die zweite thermische Wärmeleitfähigkeit $\lambda_{BP}$ (122) durch eine zweite effektive Querschnittsfläche $A_{BP}$ und eine zweite effektive Länge $L_{BP}$ (130) von zweiten Verbindungselementen (82) realisiert ist, über die die Referenzpixel (64) mit dem Detektorarray-Substrat (72) verbunden sind, wobei sich die erste effektive Querschnittsfläche $A_{MP}$ der ersten Verbindungselemente (80) von der zweiten effektiven Querschnittsfläche $A_{BP}$ der zweiten Verbindungselemente (82) unterscheidet und/oder wobei sich die erste effektive Länge $L_{MP}$ (128) der ersten Verbindungselemente (80) von der zweiten effektiven Länge $L_{BP}$ (130) der zweiten Verbindungselemente (82) unterscheidet, sodass $A_{MP}/L_{MP} \neq A_{BP}/L_{BP}$.

**16.** Infrarot-Messsystem (10) nach einem der Ansprüche 11-15, **dadurch gekennzeichnet, dass** die zweite effektive Querschnittsfläche $A_{BP}$ der zweiten Verbindungselemente (82) als ein Vielfaches der ersten effektiven Querschnittsfläche $A_{MP}$ der ersten Verbindungselemente (80) realisiert ist, insbesondere das Zweifache beträgt, bevorzugt das Fünffache beträgt, besonders bevorzugt das Zehnfache oder mehr beträgt, und/oder die erste effektive Länge $L_{MP}$ (128) der ersten Verbindungselemente (80) als ein Vielfaches der zweiten effektiven Länge $L_{BP}$ (130) der zweiten Verbindungselemente (82) realisiert ist, insbesondere das Zweifache beträgt, bevorzugt das Fünffache beträgt, besonders bevorzugt das Zehnfache oder mehr beträgt.

**17.** Infrarot-Messsystem (10) nach Anspruch 16, **dadurch gekennzeichnet, dass** die erste thermische Wärmeleitfähigkeit $\lambda_{MP}$ (120) durch erste Verbindungselemente (80) von zumindest 100 $\mu m$ Länge realisiert ist und die zweite thermische Wärmeleitfähigkeit $\lambda_{BP}$ (122) durch zweite Verbindungselemente (82) von maximal 10 $\mu m$ Länge rea-

lisiert ist.

**Claims**

1. Method for contactlessly determining a temperature of a surface (22), in particular for contactlessly determining a temperature distribution on a surface (22), by means of an infrared measurement system (10), wherein the infrared measurement system (10) includes at least:

    an infrared detector array (36) with a detector array substrate (72) and

        • with a plurality of measurement pixels (62), each connected to the detector array substrate (72) with a first thermal conductivity $\lambda_{MP}$ (120), wherein the measurement pixels (62) are sensitive to infrared radiation and provide in each case a measurement signal for determining a temperature measurement value $T_{MP}$ (66) that is dependent on an intensity of the incident infrared radiation, and
        • with a plurality of reference pixels (64), which are each connected to the detector array substrate (72) with a second thermal conductivity $\lambda_{BP}$ (122) and provide in each case a measurement signal for determining a temperature measurement value $T_{BP}$ (68),

    wherein the method comprises at least the following steps:

        • determining the temperature measurement values $T_{BP}$ (68) of a plurality of reference pixels (64);
        • determining the temperature measurement values $T_{MP}$ (66) of a plurality of measurement pixels (62);
        • correcting temperature measurement values $T_{MP}$ (66) by in each case a pixel-associated temperature drift component $T_{drift}$ (46),

    wherein the reference pixels (64) are implemented as blind pixels which are substantially insensitive to infrared radiation, wherein the second thermal conductivity $\lambda_{BP}$ (122) is greater than the first thermal conductivity $\lambda_{MP}$ (120), **characterized in that** the temperature drift components $T_{drift}$ (46) by which the temperature measurement values $T_{MP}$ are displaced in dependence on time are determined using temperature measurement values $T_{BP}$ (68), wherein a temperature drift behaviour $m_{BP}$ (102) of the reference pixels (64) is determined from temperature measurement values $T_{BP}$ (68) of the reference pixels (64) in order to determine the temperature drift components $T_{drift}$ (46) .

2. Method according to Claim 1, **characterized in that** the temperature drift components $T_{drift}$ (46) are determined repeatedly with temporal intervals, in particular regularly, preferably continuously or quasi-continuously.

3. Method according to either of the preceding claims, **characterized in that** the temperature drift behaviour $m_{BP}$ (102) of the reference pixels (64) is determined as a proportionality constant between initial measurement deviations $T_{BP,offset}$ (98) of the reference pixels (64) and temperature measurement values $T_{BP}$ (68) of the reference pixels (64), in order to determine the temperature drift components $T_{drift}$ (46).

4. Method according to any of the preceding claims, **characterized in that** the temperature drift behaviour $m_{BP}$ (102) of the reference pixels (64) is determined as a proportionality constant between sensitivities of the initial measurement deviations $\partial T_{BP,offset}$ with respect to ageing influences (112) of the reference pixels (64) and temperature measurement values $T_{BP}$ (68) of the reference pixels (64), in order to determine the temperature drift components $T_{drift}$ (46).

5. Method according to any of the preceding claims, **characterized in that,** in order to determine the temperature drift components $T_{drift}$ (46), a temperature drift behaviour $m_{MP}$ (100) of measurement pixels (62) is mathematically correlated with a temperature drift behaviour $m_{BP}$ (102) of reference pixels (64) and the temperature drift behaviour $m_{MP}$ (100) of measurement pixels (62) is determined from the mathematical correlation.

6. Method according to Claim 5, **characterized in that** the temperature drift behaviour $m_{MP}$ (100) of the measurement pixels (62) is set equal to the temperature drift behaviour $m_{BP}$ (102) of the reference pixels (64).

7. Method according to either of Claims 5 and 6, **characterized in that** the temperature drift components $T_{drift}$ (46) are determined from the temperature drift behaviour $m_{MP}$ (100) of measurement pixels (62).

8.  Method according to Claim 7, **characterized in that** the temperature drift components $T_{drift}$ (46) are determined from the temperature drift behaviour $m_{MP}$ (100) by virtue of the fact that the temperature drift components $T_{drift}$ (46) of the respective measurement pixels (62) are calculated in the form of a function as a product of temperature drift behaviour $m_{MP}$ (100) and initial measurement deviations $T_{MP,offset}$ (96) of the respective measurement pixels (62).

9.  Method according to Claim 7, **characterized in that** the temperature drift components $T_{drift}$ (46) are determined from the temperature drift behaviour $m_{MP}$ (100) by virtue of the fact that the temperature drift components $T_{drift}$ (46) of the respective measurement pixels (62) are calculated in the form of a function as a product of temperature drift behaviour $m_{MP}$ (100) and sensitivities of the initial measurement deviations $\partial T_{BP,offset}$ with respect to ageing influences (110) of the respective measurement pixels (62).

10. Method according to any of the preceding claims, **characterized in that,** in a further method step, the incidence of infrared radiation on the infrared detector array (36) is prevented by means of a closure mechanism (58) of the infrared measurement system (10), and the temperature measurement values $T_{MP}$ (66) are each corrected by a pixel-associated deviation $\Delta T_{MP}^{blind}$ (118) from a mean value $<T_{MP}^{blind}>$ (116) of all the temperature measurement values $T_{MP}^{bilnd}$ (66a) measured during the prevented incidence of infrared radiation.

11. Infrared measurement system (10), in particular handheld thermal imaging camera (10a), for contactlessly determining a temperature distribution of a surface (22), **characterized by** an evaluation apparatus (50) which is configured to carry out the method according to any of the preceding claims, and also having at least one infrared detector array (36) with a detector array substrate (72)

    • with a plurality of measurement pixels (62), each connected to the detector array substrate (72) with a first thermal conductivity $\lambda_{MP}$ (120), wherein the measurement pixels (62) are sensitive to infrared radiation and provide in each case a measurement signal for determining a temperature measurement value $T_{MP}$ (66) that is dependent on an intensity of the incident infrared radiation,
    • with a plurality of reference pixels (64), which are each connected to the detector array substrate (72) with a second thermal conductivity $\lambda_{BP}$ (122) and provide in each case a measurement signal for determining a temperature measurement value $T_{BP}$ (68),

    wherein the reference pixels (64) are implemented as blind pixels which are substantially insensitive to infrared radiation, wherein the second thermal conductivity $\lambda_{BP}$ (122) is greater than the first thermal conductivity $\lambda_{MP}$ (120).

12. Infrared measurement system (10) according to Claim 11, **characterized in that** an arrangement (90) of reference pixels (64) on the infrared detector array (36) encloses, in particular frames, an array (88) of measurement pixels (62) that is arranged on the infrared detector array (36).

13. Infrared measurement system (10) according to any of Claims 11-12, **characterized in that** the reference pixels (64) are arranged in an array (88) of measurement pixels (62) that is arranged on the infrared detector array (36), in particular are arranged regularly, preferably symmetrically, with particular preference symmetrically to at least one main axis of symmetry (92) of the infrared detector array (36).

14. Infrared measurement system (10) according to any of Claims 11-13, **characterized in that** the first thermal conductivity $\lambda_{MP}$ (120) is smaller than the second thermal conductivity $\lambda_{BP}$ (122) by a factor of 10, preferably by a factor of 100, with particular preference by a factor of 1000 or more.

15. Infrared measurement system (10) according to any of Claims 11-14, **characterized in that** the first thermal conductivity $\lambda_{MP}$ (120) is realized by a first effective cross-sectional area $A_{MP}$ and a first effective length $L_{MP}$ (128) of first connection elements (80) via which the measurement pixels (62) are connected to the detector array substrate (72), and the second thermal conductivity $\lambda_{BP}$ (122) is realized by a second effective cross-sectional area $A_{BP}$ and a second effective length $L_{BP}$ (130) of second connection elements (82) via which the reference pixels (64) are connected to the detector array substrate (72), wherein the first effective cross-sectional area $A_{MP}$ of the first connection elements (80) differs from the second effective cross-sectional area $A_{BP}$ of the second connection elements (82) and/or wherein the first effective length $L_{MP}$ (128) of the first connection elements (80) differs from the second effective length $L_{BP}$ (130) of the second connection elements (82), such that $A_{MP}/L_{MP} \neq A_{BP}/L_{BP}$.

16. Infrared measurement system (10) according to any of Claims 11-15, **characterized in that** the second effective cross-sectional area $A_{BP}$ of the second connection elements (82) is realized as a multiple of the first effective cross-sectional area $A_{MP}$ of the first connection elements (80), in particular is twice, preferably five times, with particular preference ten times or more the first effective cross-sectional area $A_{MP}$, and/or the first effective length $L_{MP}$ (128) of the first connection elements (80) is realized as a multiple of the second effective length $L_{BP}$ (130) of the second connection elements (82), in particular is twice, preferably five times, with particular preference ten times or more the second effective length $L_{BP}$ (130).

**17.** Infrared measurement system (10) according to Claim 16, **characterized in that** the first thermal conductivity $\lambda_{MP}$ (120) is realized by way of first connection elements (80) having a length of at least 100 μm, and the second thermal conductivity $\lambda_{BP}$ (122) is realized by way of second connection elements (82) having a length of at most 10 μm.

**Revendications**

**1.** Procédé de détermination sans contact d'une température d'une surface (22), en particulier de détermination sans contact d'une distribution de température d'une surface (22), au moyen d'un système de mesure infrarouge (10), le système de mesure infrarouge (10) comportant au moins :

un réseau de détecteurs infrarouges (36) pourvu d'un substrat de réseau de détecteurs (72) et

• d'une pluralité de pixels de mesure (62) qui sont chacun liés au substrat de réseau de détecteurs (72) avec un première conductivité thermique $\lambda_{MP}$ (120), les pixels de mesure (62) étant sensibles au rayonnement infrarouge et fournissant chacun un signal de mesure destiné à déterminer une valeur de mesure de température $T_{MP}$ (66) dépendant d'une intensité du rayonnement infrarouge incident, et
• d'une pluralité de pixels de référence (64) qui sont chacun liés au substrat de réseau de détecteurs (72) avec une deuxième conductivité thermique $\lambda_{BP}$ (122) et qui fournissent chacun un signal de mesure destiné à déterminer une valeur de mesure de température $T_{BP}$ (68),

le procédé comprenant au moins les étapes suivantes :

• déterminer les valeurs de mesure de température $T_{BP}$ (68) d'une pluralité de pixels de référence (64) ;
• déterminer les valeurs de mesure de température $T_{MP}$ (66) d'une pluralité de pixels de mesure (62) ;
• corriger les valeurs de mesure de température $T_{MP}$ (66) d'une composante de dérive de température $T_{drift}$ (46) associée aux pixels,

les pixels de référence (64) étant réalisés sous forme de pixels fictifs qui sont sensiblement insensibles au rayonnement infrarouge, la deuxième conductivité thermique $\lambda_{BP}$ (122) étant supérieure à la première conductivité thermique $\lambda_{MP}$ (120), **caractérisé en ce que** les composantes de dérive de température $T_{drift}$ (46), desquelles les valeurs de mesure de température $T_{MP}$ se décalent en fonction de temps, sont déterminées à l'aide de valeurs de mesure de température $T_{BP}$ (68), un comportement de dérive de température $m_{BP}$ (102) des pixels de référence (64) étant déterminé à partir des valeurs de mesure de température $T_{BP}$ (68) des pixels de référence (64) afin de déterminer les composantes de dérive de température $T_{drift}$ (46).

**2.** Procédé selon la revendication 1, **caractérisé en ce que** les composantes de dérive de température $T_{drift}$ (46) sont déterminées de manière répétée à des intervalles de temps, notamment régulièrement, de préférence en continu ou quasi-continu.

**3.** Procédé selon l'une des revendications précédentes, **caractérisé en ce que**, pour déterminer les composantes de dérive de température $T_{drift}$ (46), le comportement de dérive de température $m_{BP}$ (102) des pixels de référence (64) est déterminé comme constante de proportionnalité entre des écarts de mesure initiaux $T_{BP,offset}$ (98) des pixels de référence (64) et des valeurs de mesure de température $T_{BP}$ (68) des pixels de référence (64).

**4.** Procédé selon l'une des revendications précédentes, **caractérisé en ce que**, pour déterminer les composantes de dérive de température $T_{drift}$ (46), le comportement de dérive de température $m_{BP}$ (102) des pixels de référence (64) est déterminé comme constante de proportionnalité entre les sensibilités des écarts de mesure initiaux $\partial T_{BP,offset}$ par rapport à des influences de vieillissement (112) des pixels de référence (64) et des valeurs de mesure de température $T_{BP}$ (68) des pixels de référence (64) .

**5.** Procédé selon l'une des revendications précédentes, **caractérisé en ce que**, pour déterminer les composantes de dérive de température $T_{drift}$ (46), un comportement de dérive de température $m_{MP}$ (100) de pixels de mesure (62) est mis en relation mathématique avec un comportement de dérive de température $m_{BP}$ (102) de pixels de référence (64) et le comportement de dérive de température $m_{MP}$ (100) de pixels de mesure (62) est déterminé à partir de la relation mathématique.

6. Procédé selon la revendication 5, **caractérisé en ce que** le comportement de dérive de température $m_{MP}$ (100) des pixels de mesure (62) est défini comme étant égal au comportement de dérive de température $m_{BP}$ (102) des pixels de référence (64).

7. Procédé selon la revendication 5 ou 6, **caractérisé en ce que** les composantes de dérive de température $T_{drift}$ (46) sont déterminées à partir du comportement de dérive de température $m_{MP}$ (100) de pixels de mesure (62) .

8. Procédé selon la revendication 7, **caractérisé en ce que** les composantes de dérive de température $T_{drift}$ (46) sont déterminées à partir du comportement de dérive de température $m_{MP}$ (100) par calcul des composantes de dérive de température $T_{drift}$ (46) des pixels de mesure respectifs (62) sous la forme d'une fonction qui est le produit du comportement de dérive de température $m_{MP}$ (100) par les écarts de mesure initiaux $T_{MP,offset}$ (96) des pixels de mesure respectifs (62) .

9. Procédé selon la revendication 7, **caractérisé en ce que** les composantes de dérive de température $T_{drift}$ (46) sont déterminées à partir du comportement de dérive de température $m_{MP}$ (100) par calcul des composantes de dérive de température $T_{drift}$ (46) des pixels de mesure respectifs (62) sous la forme d'une fonction qui est le produit du comportement de dérive de température $m_{MP}$ (100) par les sensibilités des écarts de mesure initiaux $\partial T_{BP,offset}$ par rapport à des influences de vieillissement (110) des pixels de mesure respectifs (62).

10. Procédé selon l'une des revendications précédentes, **caractérisé en ce que**, dans une autre étape de procédé, une incidence de rayonnement infrarouge au réseau de détecteurs infrarouges (36) est empêchée au moyen d'un mécanisme d'obturation (58) du système de mesure infrarouge (10) et les valeurs de mesure de température $T_{MP}$ (66) sont chacune corrigées d'un écart $\Delta T_{MP}^{blind}$ (118), dépendant des pixels, par rapport à une valeur moyenne < $T_{M}^{blind}$ > (116) de toutes les valeurs de mesure de température $T_{MP}^{blind}$ (66a) mesurées lorsque l'incidence du rayonnement infrarouge est empêchée.

11. Système de mesure infrarouge (10), en particulier caméra thermique à main (10a), destiné à déterminer sans contact une distribution de température d'une surface (22), **caractérisé par** un dispositif d'évaluation (50) qui est conçu pour mettre en œuvre le procédé selon l'une des revendications précédentes, et comportant au moins un réseau de détecteurs infrarouges (36) pourvu d'un substrat de réseau de détecteurs (72),

   • d'une pluralité de pixels de mesure (62) qui sont chacun liés au substrat de réseau de détecteurs (72) avec une première conductivité thermique $\lambda_{MP}$ (120), les pixels de mesure (62) étant sensibles au rayonnement infrarouge et fournissant chacun un signal de mesure destiné à déterminer une valeur de mesure de température $T_{MP}$ (66) dépendant d'une intensité du rayonnement infrarouge incident, et
   • d'une pluralité de pixels de référence (64) qui sont chacun liés au substrat de réseau de détecteurs (72) avec une deuxième conductivité thermique $\lambda_{BP}$ (122) et qui fournissent chacun un signal de mesure destiné à déterminer une valeur de mesure de température $T_{BP}$ (68), les pixels de référence (64) étant réalisés sous forme de pixels fictifs qui sont sensiblement insensibles au rayonnement infrarouge, la deuxième conductivité thermique $\lambda_{BP}$ (122) étant supérieure à la première conductivité thermique $\lambda_{MP}$ (120).

12. Système de mesure infrarouge (10) selon la revendication 11, **caractérisé en ce qu'**un ensemble (90) de pixels de référence (64) sur le réseau de détecteurs infrarouges (36) entoure, notamment encadre, un réseau (88) de pixels de mesure (62) qui est disposé sur le réseau de détecteurs infrarouges (36).

13. Système de mesure infrarouge (10) selon l'une des revendications 11-12, **caractérisé en ce que** les pixels de référence (64) sont disposés suivant un réseau (88) de pixels de mesure (62) qui est disposé sur le réseau de détecteurs infrarouges (36), en particulier sont disposés de manière régulière, de préférence sont disposés symétriquement, de manière particulièrement préférée sont disposés symétriquement par rapport à au moins un axe de symétrie principal (92) du réseau de détecteurs infrarouges (36).

14. Système de mesure infrarouge (10) selon l'une des revendications 11 à 13, **caractérisé en ce que** la première conductivité thermique $\lambda_{MP}$ (120) est inférieure d'un facteur 10, de préférence d'un facteur 100, de manière particulièrement préférée d'un facteur 1000 ou plus à la deuxième conductivité thermique $\lambda_{BP}$ (122).

15. Système de mesure infrarouge (10) selon l'une des revendications 11 à 14, **caractérisé en ce que** la première conductivité thermique $\lambda_{MP}$ (120) est réalisée par une première surface efficace en coupe transversale $A_{MP}$ et une première longueur efficace $L_{MP}$ (128) de premiers éléments de liaison (80) par le biais desquels les pixels de mesure (62) sont liés au substrat de réseau de détecteurs (72), et la deuxième conductivité thermique $\lambda_{BP}$ (122) est réalisée par une deuxième surface efficace en coupe transversale $A_{BP}$ et une deuxième longueur efficace $L_{BP}$ (130) de deuxièmes éléments de liaison (82) par le biais desquels les pixels de référence (64) sont liés au substrat de réseau de détecteurs (72), la première surface efficace en coupe transversale $A_{MP}$ des premiers éléments de liaison (80) différant de la deuxième surface efficace en coupe transversale $A_{BP}$ des deuxièmes éléments de liaison (82) et/ou la première longueur efficace $L_{MP}$ (128) des premiers éléments de liaison (80) différant de la deuxième longueur efficace $L_{BP}$ (130) des deuxièmes éléments de liaison (82) de sorte que $A_{MP}/L_{MP} \neq A_{BP}/L_{BP}$.

16. Système de mesure infrarouge (10) selon l'une des revendications 11 à 15, **caractérisé en ce que** la deuxième surface efficace en coupe transversale $A_{BP}$ des deuxièmes éléments de liaison (82) est un multiple de la première surface efficace en coupe transversale $A_{MP}$ des premiers éléments de liaison (80), en particulier le double, de préférence le quintuple, de manière particulièrement préférée le décuple ou plus, et/ou la première longueur efficace $L_{MP}$ (128) des premiers éléments de liaison (80) est un multiple de la deuxième longueur efficace $L_{BP}$ (130) des deuxièmes éléments de liaison (82), en particulier le double, de préférence le quintuple, de manière particulièrement préférée le décuple ou plus.

17. Système de mesure infrarouge (10) selon la revendication 16, **caractérisé en ce que** la première conductivité thermique $\lambda_{MP}$ (120) est réalisée par des premiers éléments de liaison (80) d'au moins 100 $\mu$m de longueur et la deuxième conductivité thermique $\lambda_{BP}$ (122) est réalisée par des deuxièmes éléments de liaison (82) d'une longueur maximale de 10 $\mu$m.

# Fig. 1

# Fig. 2

# Fig. 3

# Fig. 4

EP 3 479 085 B1

# Fig. 5

**(a)**

**(b)**

**(c)**

**Fig. 5**
**(d)**

# Fig. 6

## (a)

## (b)

# Fig. 7

224

200

202

204

206

208

210

212

214

216

218

220

222

# Fig. 8

**(a)**

94

| | 1 | 2 | 3 | 4 | 5 | 6 | 7 | 8 | 9 | 10 | |
|---|---|---|---|---|---|---|---|---|---|---|---|
| 1 | 0.1 | 0.1 | 0.1 | 0.2 | 0.3 | 0.1 | 0.1 | 0.3 | 0.3 | 0.0 | 1 |
| 2 | 0.0 | -0.3 | -0.3 | -0.0 | -0.2 | -0.1 | -0.2 | -0.4 | -0.3 | 0.1 | 2 |
| 3 | 0.2 | -0.4 | -0.2 | -0.4 | -0.2 | -0.2 | -0.3 | -0.5 | -0.2 | 0.2 | 3 |
| 4 | 0.1 | -0.1 | -0.1 | -0.2 | -0.1 | -0.2 | -0.2 | -0.4 | -0.3 | 0.1 | 4 |
| 5 | 0.4 | -0.2 | -0.2 | -0.0 | -0.3 | -0.4 | -0.3 | -0.3 | -0.4 | 0.3 | 5 |
| 6 | 0.2 | -0.2 | -0.1 | -0.2 | -0.2 | -0.3 | -0.4 | -0.2 | -0.5 | 0.3 | 6 |
| 7 | 0.3 | -0.0 | -0.2 | -0.3 | -0.4 | -0.3 | -0.3 | -0.2 | -0.5 | 0.4 | 7 |
| 8 | 0.3 | -0.1 | -0.3 | -0.2 | -0.4 | -0.4 | -0.2 | -0.3 | -0.4 | 0.2 | 8 |
| 9 | 0.1 | -0.2 | -0.3 | -0.4 | -0.1 | -0.2 | -0.2 | -0.1 | -0.3 | 0.3 | 9 |
| 10 | 0.2 | 0.3 | 0.5 | 0.5 | 0.3 | 0.1 | 0.1 | 0.0 | 0.1 | 0.2 | 10 |
| | 1 | 2 | 3 | 4 | 5 | 6 | 7 | 8 | 9 | 10 | |

98
96

**(b)**

114

| | 1 | 2 | 3 | 4 | 5 | 6 | 7 | 8 | 9 | 10 | |
|---|---|---|---|---|---|---|---|---|---|---|---|
| 1 | 0.1 | 0.3 | 0.1 | 0.1 | 0.2 | 0.1 | 0.3 | 0.3 | 0.1 | 0.0 | 1 |
| 2 | 0.3 | -0.3 | -0.0 | -0.2 | -0.0 | -0.1 | -0.4 | -0.2 | -0.3 | 0.1 | 2 |
| 3 | 0.2 | -0.2 | -0.2 | -0.3 | -0.4 | -0.2 | -0.5 | -0.2 | -0.4 | 0.2 | 3 |
| 4 | 0.1 | -0.3 | -0.1 | -0.2 | -0.2 | -0.2 | -0.4 | -0.1 | -0.1 | 0.1 | 4 |
| 5 | 0.2 | -0.4 | -0.4 | -0.3 | -0.0 | -0.4 | -0.3 | -0.3 | -0.2 | 0.3 | 5 |
| 6 | 0.1 | -0.5 | -0.2 | -0.4 | -0.2 | -0.3 | -0.2 | -0.2 | -0.2 | 0.3 | 6 |
| 7 | 0.2 | -0.5 | -0.3 | -0.3 | -0.3 | -0.3 | -0.2 | -0.4 | -0.0 | 0.4 | 7 |
| 8 | 0.3 | -0.4 | -0.3 | -0.2 | -0.2 | -0.4 | -0.3 | -0.4 | -0.1 | 0.2 | 8 |
| 9 | 0.3 | -0.3 | -0.1 | -0.2 | -0.4 | -0.2 | -0.1 | -0.1 | -0.2 | 0.3 | 9 |
| 10 | 0.5 | 0.1 | 0.2 | 0.1 | 0.5 | 0.1 | 0.0 | 0.3 | 0.3 | 0.2 | 10 |
| | 1 | 2 | 3 | 4 | 5 | 6 | 7 | 8 | 9 | 10 | |

112
110

Fig. 9

**(a)**

**(b)**

EP 3 479 085 B1

Fig. 9

(c)

(d)

Fig. 9

(e)

## Fig. 10

(a)

(b)

38

Fig. 10

**Fig. 10**

(e)

Empfindlichkeit der initialen
Messabweichung $\partial T_{MP, offset}$ (a.u.) ←110

# Fig. 11

## (a)

## (b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6659639 A1
- US 20090304042 A1
- US 20090302219 A1
- US 7652251 A1
- DE 202013008745 U1
- DE 102008041750 A1
- EP 2690416 A1
- WO 2007015235 A1
- WO 0136926 A1
- US 2010193706 A1
- DE 102012208220 A1
- US 2001040216 A1
- US 2010046577 A1